# EUROPEAN PATENT APPLICATION

(11) **EP 4 624 318 A2**
(43) Date of publication of application: **01.10.2025**
(21) Application number: 23892028.4
(22) Date of filing: 16.11.2023
(51) Int. Cl.: B63B 79/40, B63B 79/30, B63B 49/00, B63B 25/16, G01C 21/20, B63B 79/20, G06N 3/08, B63H 21/38, B63B 11/04, F17C 9/02

(54) **METHOD AND DEVICE FOR OPTIMIZING SHIP NAVIGATION**

(30) Priority: 16.11.2022 KR 20220153980; 28.04.2023 KR 20230055984; 28.04.2023 KR 20230056136
(71) Applicant: HD Korea Shipbuilding & Offshore Engineering Co., Ltd., Seongnam-si, Gyeonggi-do 13553 (KR); HD Hyundai Heavy Industries Co., Ltd., Dong-gu Ulsan 44032 (KR)
(72) Inventor: KO, Yoon Ae, Seongnam-si, Gyeonggi-do 13553 (KR); LEE, Yu Jin, Seongnam-si, Gyeonggi-do 13553 (KR); KIM, Sung Hoon, Seongnam-si, Gyeonggi-do 13553 (KR); LEE, Sung Won, Seongnam-si, Gyeonggi-do 13553 (KR); RYU, Gwang Nyeon, Seongnam-si, Gyeonggi-do 13553 (KR); CHOI, Nak Chul, Seongnam-si, Gyeonggi-do 13553 (KR)
(74) Representative: Cabinet Netter
(86) International application number: PCT/KR2023/018429
(87) International publication number: WO 2024/106965

(57) **Abstract**

The present disclosure relates to a method and device for optimizing navigation of a ship. The method according to an embodiment of the present disclosure may generate recommended navigation information about a navigation route of a ship, based on navigation plan information associated with a departure location and an arrival location of the ship, predict a boil-off gas (BOG) generation amount of the ship and a tank pressure value of the ship, based on the recommended navigation information, and obtain optimal navigation information associated with operation control of the ship, based on the BOG generation amount and the tank pressure value.

## Description

### Technical Field

The present disclosure relates to a method and device for optimizing navigation of a ship.

### Background Art

In general, when a ship transports liquefied gas, some gas naturally vaporizes within a liquefied gas tank, generating what is referred to as boil-off gas (BOG).

Generation of BOG increases the internal pressure of the tank, which may compromise the safety of the liquefied gas tank, posing a risk of explosion. To prevent such a risk, BOG is released, but this process may cause environmental pollution and waste liquefied gas.

In addition, to maintain the internal pressure of the tank, BOG may be used as fuel for a main engine or a generator engine of the ship, and any remaining BOG, despite this use as fuel, may be liquefied by using a reliquefaction unit and then stored in a cargo tank, or may be removed by using a gas combustion unit (GCU).

Thus, ship navigation costs vary significantly depending on the amount of BOG generated during liquefied gas transport, ship speed, power consumption, the BOG handling method, a sea area location or climate conditions along a navigation route, which makes it difficult to predict costs when planning for economical navigation. In particular, each ship has a different cargo handling system (CHS), adding complexity to the analysis of economical operating modes as described above, and the amount of BOG generated varies depending on the navigation route, and thus, it is difficult for the operator of the ship to achieve optimal operation that minimizes liquefied gas consumption. Accordingly, there is a need for a method of efficiently controlling a liquefied gas carrier by using an operating mode that minimizes liquefied gas consumption.

The above-mentioned background art is technical information possessed by the inventor for the derivation of the present disclosure or acquired during the derivation of the present disclosure, and cannot necessarily be said to be a known technique disclosed to the general public prior to the filing of the present disclosure.

### Disclosure of Invention

### Technical Problem

The present disclosure is to provide a method and device for optimizing navigation of a ship. In addition, the present disclosure is to provide a computer-readable recording medium having recorded thereon a program for causing a computer to execute the method.

Objectives of the present disclosure are not limited to the foregoing, and other unmentioned objectives or advantages of the present disclosure would be understood from the following description and be more clearly understood from the embodiments of the present disclosure. In addition, it would be appreciated that the objectives and advantages of the present disclosure may be implemented by means provided in the claims and a combination thereof.

### Solution to Problem

As a technical solution for achieving the technical objectives described above, a first aspect of the present disclosure may provide a method of optimizing navigation of a ship, the method including: generating recommended navigation information about a navigation route of the ship, based on navigation plan information associated with a departure location and an arrival location of the ship; predicting a boil-off gas (BOG) generation amount of the ship and a tank pressure value of the ship, based on the recommended navigation information; and obtaining optimal navigation information associated with operation control of the ship, based on the BOG generation amount and the tank pressure value.

A second aspect of the present disclosure may provide a computing device including: at least one memory; and at least one processor, wherein the processor is configured to generate recommended navigation information about a navigation route of a ship, based on navigation plan information associated with a departure location and an arrival location of the ship, predict a BOG generation amount of the ship and a tank pressure value of the ship, based on the recommended navigation information, and obtain optimal navigation information associated with operation control of the ship, based on the BOG generation amount and the tank pressure value.

A third aspect of the present disclosure may provide a computer-readable recording medium having recorded thereon a program for causing a computer to execute the method according to the first aspect.

In addition, other methods and systems for implementing the present disclosure, and a computer-readable recording medium having recorded thereon a computer program for executing the methods may be further provided.

Other aspects, features, advantages other than those described above will become apparent from the following drawings, claims, and detailed description of the present disclosure.

### Advantageous Effects of Invention

According to the solutions provided by the present disclosure as described above, recommended navigation information about a navigation route of a ship is generated based on navigation plan information associated with a departure location and an arrival location of the ship, a boil-off gas (BOG) generation amount of the ship and a tank pressure value of the ship are predicted based on the recommended navigation information, and optimal navigation information associated with operation control of the ship is obtained based on the BOG generation amount and the tank pressure value, thereby enabling economical navigation that minimizes the liquefied gas consumption amount of the ship.

In addition, according to the solutions provided by the present disclosure, a BOG generation amount and a tank pressure value are predicted based on environmental information including at least one of location-specific weather/climate information, tidal current information, sea state information, and ocean current information all about the navigation route of the ship, and optimal navigation information is obtained based on the predicted BOG generation amount and tank pressure value, to calculate an entire navigation operation, thereby providing guidance for cargo management from the departure point to the destination of the ship, and enabling safe cargo handling based on the predicted tank pressure value.

In addition, according to the solutions provided by the present disclosure, optimal navigation information is obtained by updating a ship speed and a liquefied gas consumption amount associated with a navigation route, thereby providing an operation guide to an operator to assist navigation, and offering a carbon tax reduction effect by reducing the amount of incineration in a gas combustion unit (GCU) and the fuel gas consumption amount of engines.

Effects of the present disclosure are not limited to the foregoing, and other unmentioned effects would be clearly understood by those skilled in the art from the following description.

### Brief Description of Drawings

FIG. 1 is a diagram for describing an example of a system for optimizing navigation of a ship, according to an embodiment.
FIG. 2 is a configuration diagram illustrating an example of a user terminal according to an embodiment.
FIG. 3 is a configuration diagram illustrating an example of a server according to an embodiment.
FIG. 4 is a flowchart for describing an example of a method of optimizing navigation of a ship, according to an embodiment.
FIG. 5 is a flowchart for describing an example in which a processor generates recommended navigation information based on navigation plan information, according to an embodiment.
FIG. 6 is a flowchart for describing an example in which a processor predicts a boil-off gas (BOG) generation amount and a tank pressure value of a ship based on recommended navigation information, according to an embodiment.
FIG. 7 is a flowchart for describing an example in which a processor obtains optimal navigation information based on a BOG generation amount and a tank pressure value, according to an embodiment.
FIG. 8 is a flowchart for describing another example in which a processor obtains optimal navigation information based on a BOG generation amount and a tank pressure value, according to an embodiment.
FIG. 9 is a flowchart for describing another example of a method of optimizing navigation of a ship, according to an embodiment.
FIG. 10 is a diagram for describing an example of a method of predicting a BOG generation amount, according to an embodiment.
FIG. 11 is a flowchart for describing an example of a method of predicting a BOG generation amount of a ship, according to an embodiment.
FIG. 12 is a diagram for describing an example of calculating a gas consumption amount of a ship, according to an embodiment.
FIG. 13A is a configuration diagram illustrating an example of a stacking model according to an embodiment.
FIG. 13B is a configuration diagram illustrating an example of a BOG generation amount prediction model for a ship, according to an embodiment.
FIG. 14 is a diagram for describing an example of calculating ground-truth data for training, according to an embodiment.
FIG. 15A is a diagram for describing a processor 110 removing loss data from data stored in a memory 120, according to an embodiment.
FIG. 15B is a diagram for describing an example of separating a portion of pre-stored navigation data as training data for an input data selection model, and another portion as test data for a BOG generation amount prediction model for a ship, according to an embodiment.
FIG. 16A is a diagram for describing an example of obtaining current navigation data of a ship from an external environment around the ship, according to an embodiment.
FIG. 16B is a diagram illustrating an example of obtaining current navigation data of a ship from an interior of the ship, according to an embodiment.
FIG. 17 is a diagram for describing an example of calculating a final BOG generation amount prediction value by applying weights to initial BOG generation amount prediction values, according to an embodiment.
FIG. 18 is a diagram for describing an example of a method of predicting a tank pressure of a ship, according to an embodiment.
FIG. 19 is a flowchart for describing an example of a method of predicting a tank pressure of a ship, according to an embodiment.
FIG. 20A is a diagram for describing an example of separating a portion of pre-stored actual navigation data as training data and another portion as test data, according to an embodiment.
FIG. 20B is a diagram for describing an example of a process of processing pre-stored actual navigation data, according to an embodiment.
FIG. 21 is a diagram for describing an example of a process of training a deep learning model for predicting a tank pressure of a ship, according to an embodiment.
FIG. 22 is a diagram for describing an example of determining a navigation mode based on whether a liquefied gas level within a tank is greater than or equal to a predetermined height, according to an embodiment.
FIG. 23 is a diagram for describing an example of deep learning models respectively corresponding to a plurality of navigation modes according to a liquefied gas level within a tank, according to an embodiment.
FIG. 24 is a diagram for describing an example of obtaining a tank pressure prediction value by applying weights to a plurality of intermediate values, according to an embodiment.
FIG. 25 is a diagram for describing an example of a method of optimizing navigation of a ship, according to an embodiment.
FIG. 26 is a flowchart for describing an example of a method of optimizing navigation of a ship, according to an embodiment.
FIG. 27 is a diagram for describing an example of obtaining optimal navigation information in different manners depending on whether a speed for each navigation section, which is included in recommended navigation information, is used for navigation of a ship, according to an embodiment.
FIG. 28A is a flowchart for describing an example of obtaining optimal navigation information in a case in which a speed for each navigation section, which is included in recommended navigation information, is used for navigation of a ship, according to an embodiment.
FIG. 28B is a flowchart for describing an example of obtaining optimal navigation information in a case in which a speed for each navigation section, which is included in recommended navigation information, is not used for navigation of a ship, according to an embodiment.
FIG. 29 is a diagram for describing an example of a system for controlling navigation of a ship, according to an embodiment.
FIG. 30 is a configuration diagram illustrating an example of a server according to an embodiment.
FIG. 31 is a flowchart for describing an example of a method of controlling navigation of a ship, according to an embodiment.
FIG. 32 is a diagram illustrating an example of a screen on which preset navigation information for a ship is displayed, according to an embodiment.
FIG. 33 is a diagram illustrating an example of a screen from which any one of a manually set route for a ship and a route for the ship that is automatically set via a route optimization function may be obtained, according to an embodiment.
FIG. 34 is a diagram for describing an example of a method of calculating a prediction value for the pressure of a liquefied gas cargo tank, according to an embodiment.
FIG. 35A is a diagram illustrating an example of a result of comparing prediction values for the pressure inside a liquefied gas cargo tank pressure with measured values, and a result of comparing an average speed value with measured values, according to an embodiment.
FIG. 35B is a diagram illustrating an example of a result of comparing prediction values for the amount of liquefied gas evaporated in a liquefied gas cargo tank, with measured values, according to an embodiment.
FIG. 35C is a diagram illustrating an example of a result comparing economical navigation indices for a ship with measured values, according to an embodiment.
FIG. 36 is a diagram illustrating an example of a screen displayed by a processor, according to an embodiment.

### Best Mode for Carrying out the Invention

The present disclosure relates to a method and device for optimizing navigation of a ship. The method according to an embodiment of the present disclosure may generate recommended navigation information about a navigation route of a ship, based on navigation plan information associated with a departure location and an arrival location of the ship, predict a boil-off gas (BOG) generation amount of the ship and a tank pressure value of the ship, based on the recommended navigation information, and obtain optimal navigation information associated with operation control of the ship, based on the BOG generation amount and the tank pressure value.

### Mode for the Invention

Hereinafter, various embodiments of the present disclosure will be described with reference to the accompanying drawings. Various embodiments of the present disclosure may be variously modified and may have various embodiments, and particular embodiments are illustrated in the drawings and detailed descriptions related to the embodiments are described. However, this is not intended to limit various embodiments of the present disclosure to particular modes of practice, and it is to be appreciated that all changes, equivalents, and/or substitutes that do not depart from the spirit and technical scope of various embodiments of the present disclosure are encompassed in the present disclosure. With regard to the description of the drawings, similar reference numerals are used to refer to similar elements.

As used in various embodiments of the present disclosure, the expressions "include", "may include", and other conjugates refer to the existence of a corresponding disclosed function, operation, or constituent element, and do not limit one or more additional functions, operations, or constituent elements. In addition, as used in various embodiments of the present disclosure, the terms "include", "have", and other conjugates are intended merely to denote a certain feature, numeral, step, operation, element, component, or a combination thereof, and should not be construed to initially exclude the existence of or a possibility of addition of one or more other features, numerals, steps, operations, elements, components, or combinations thereof.

As used in various embodiments of the present disclosure, expressions such as "or" include any and all combinations of the listed words. For example, "A or B" may include A, may include B, or may include both A and B.

As used in various embodiments of the present disclosure, expressions such as "first" or "second" may modify various components of various embodiments, but do not limit the components. For example, the expressions do not limit the order and/or importance of the components. The expressions may be used to distinguish one component from another. For example, a first user device and a second user device are all user devices, and refer to different user devices. For example, a first element may be referred to as a second element, and a second element may be referred to as a first element in a similar manner, without departing from the scope of various embodiments of the present disclosure.

As used in embodiments of the present disclosure, terms such as "module", "unit", "part", etc., denote a unit of a component that performs at least one function or operation, and may be implemented as hardware or software or a combination of hardware and software. In addition, a plurality of "modules", "units", "parts", etc. may be integrated into at least one module or chip to be implemented as at least one processor, except for cases in which each of them needs to be implemented as separate particular hardware.

The terms used in various embodiments of the present disclosure are used only to describe a particular embodiment, and are not intended to limit the various embodiments of the present disclosure. The singular expression also includes the plural meaning as long as it is not inconsistent with the context.

Unless otherwise defined, all terms, including technical and scientific terms, used herein have the same meaning as commonly understood by those of skill in the art to which the present disclosure pertains based on an understanding of the present disclosure.

Terms, such as those defined in commonly used dictionaries, are to be interpreted as having a meaning that is consistent with their meaning in the context of the relevant art and various embodiments of the present disclosure, and are not to be interpreted in an idealized or overly formal sense unless expressly so defined herein.

In the present disclosure, the term "liquefied gas" may be used comprehensively to encompass all gaseous fuels generally stored in a liquid state, such as liquefied natural gas (LNG), liquefied petroleum gas (LPG), ethylene, ammonia, or hydrogen, and for convenience of description, may also refer to such gases even when they are not in a liquid state due to heating or pressurization. This may apply similarly to "evaporated gas".

Here, for convenience description, the term "LNG" may refer to natural gas (NG) not only in a liquid state but also in other states, such as a supercritical state, and evaporated gas may refer not only to evaporated gas in a gaseous state but also to liquefied evaporated gas.

Furthermore, the term "gas consumption amount" may be used comprehensively to encompass a consumption amount of both liquefied gas and boil-off gas (BOG), or may also be used to refer specifically to a consumption amount of either liquefied gas or BOG.

Here, BOG refers to natural gas that naturally evaporates and vaporizes within a tank on a ship. In general, liquefied gas is transported in a cryogenic liquid state, and tanks on a ship for storing liquefied gas have an insulation structure to maintain an extremely low temperature. However, because the temperature outside the tank is approximately 40 °C, resulting in a temperature difference between the interior and exterior of the tank of about 200 °C or more, heat ingress from the outside cannot be entirely prevented. Generation of BOG, caused by heat ingress into the tank, leads to economic issues.

Hereinafter, various embodiments of the present disclosure will be described in detail with reference to the accompanying drawings.

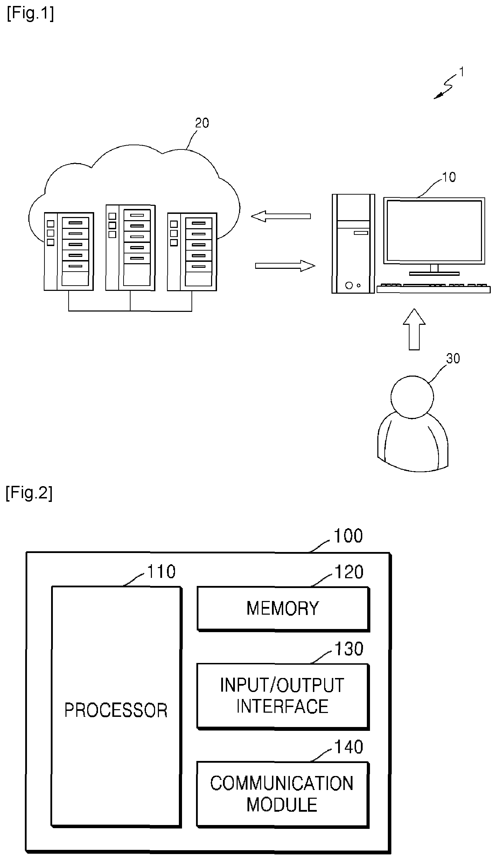

FIG. 1 is a diagram for describing an example of a system for optimizing navigation of a ship, according to an embodiment.

Referring to FIG. 1, a system 1 includes a user terminal 10 and a server 20. For example, the user terminal 10 and the server 20 may be connected to each other in a wired or wireless communication manner, so as to transmit and receive data (e.g., navigation plan information, recommended navigation information, a BOG generation amount, a tank pressure value, or optimal navigation information) to and from each other.

For convenience of description, FIG. 1 illustrates that the system 1 includes the user terminal 10 and the server 20, but the present disclosure is not limited thereto. For example, other external devices (not shown) may be included in the system 1, and operations of the user terminal 10 and the server 20 to be described below may be implemented by a single device (e.g., the user terminal 10 or the server 20) or a plurality of devices.

The user terminal 10 may be a computing device that is equipped with a display device and a device (e.g., a keyboard or a mouse) for receiving a user input, and includes a memory and a processor. For example, the display device may be implemented as a touch screen to receive a user input. For example, the user terminal 10 may correspond to a notebook personal computer (PC), a desktop PC, a laptop, a tablet computer, a smart phone, or the like, but is not limited thereto.

The server 20 may be a device capable of communicating with external devices (not shown), including the user terminal 10. For example, the server 20 may be a device capable of storing various pieces of data, including navigation plan information, recommended navigation information, a BOG generation amount, a tank pressure value, optimal navigation information, and the like.

Alternatively, the server 20 may be a computing device including a memory and a processor, and having computational capabilities. For example, the server 20 may perform at least some of operations of the user terminal 10, which will be described below with reference to FIGS. 1 to 36. For example, the server 20 may be a cloud server, but is not limited thereto.

The user terminal 10 may obtain optimal navigation information associated with operation control of the ship. For example, based on navigation plan information associated with a departure location and an arrival location of the ship, the user terminal 10 may generate recommended navigation information about a navigation route of the ship. In addition, based on the recommended navigation information, the user terminal 10 may predict a BOG generation amount of the ship and a tank pressure value of the ship. In addition, based on the BOG generation amount and the tank pressure value, the user terminal 10 may obtain optimal navigation information associated with operation control of the ship.

In addition, the user terminal 10 may control the ship according to a preset operating mode by using the optimal navigation information. For example, by using learned optimal navigation information, the user terminal 10 may control the ship according to an operating mode that minimizes the liquefied gas consumption amount of the ship.

For example, the user terminal 10 may obtain optimal navigation information associated with operation control of the ship via an application installed on the user terminal 10, and control the ship according to a preset operating mode by using the optimal navigation information. Here, the application may be a software program installed for the purpose of navigation planning and control activities of a user 30. For example, via the application, the user 30 may perform various navigation planning and control activities, such as generating recommended navigation information, predicting a BOG generation amount, predicting a tank pressure value, obtaining optimal navigation information, controlling an operation of the ship, and the like.

In addition, for convenience of description, throughout the specification, it is described that the user terminal 10 generates recommended navigation information about a navigation route of the ship, based on navigation plan information associated with a departure location and an arrival location of the ship, predicts a BOG generation amount of the ship and a tank pressure value of the ship, based on the recommended navigation information, and obtains optimal navigation information associated with operation control of the ship, based on the BOG generation amount and the tank pressure value, but the present disclosure is not limited thereto. For example, at least some of operations performed by the user terminal 10 may also be performed by the server 20.

In other words, at least some of operations of the user terminal 10 described with reference to FIGS. 1 to 36 may be performed by the server 20. For example, the server 20 may generate recommended navigation information about a navigation route of the ship, based on navigation plan information associated with a departure location and an arrival location of the ship, predict a BOG generation amount of the ship and a tank pressure value of the ship, based on the recommended navigation information, and obtain optimal navigation information associated with operation control of the ship, based on the BOG generation amount and the tank pressure value. In addition, the server 20 may control the ship according to a preset operating mode by using the optimal navigation information.

FIG. 2 is a configuration diagram illustrating an example of a user terminal according to an embodiment.

Referring to FIG. 2, a user terminal 100 includes a processor 110, a memory 120, an input/output interface 130, and a communication module 140. For convenience of description,

FIG. 2 illustrates only components associated with the present disclosure. Thus, the user terminal 100 may further include other general-purpose components, in addition to the components illustrated in FIG. 2. In addition, it is obvious to those of skill in the art related to the present disclosure that the processor 110, the memory 120, the input/output interface 130, and the communication module 140 illustrated in FIG. 2 may also be implemented as independent devices.

The processor 110 may process commands of a computer program by performing basic arithmetic, logic, and input/output operations. Here, the commands may be provided from the memory 120 or an external device (e.g., the server 20). In addition, the processor 110 may control the overall operation of other components included in the user terminal 100.

First, based on navigation plan information associated with a departure location and an arrival location of the ship, the processor 110 generates recommended navigation information about a navigation route of the ship. For example, the processor 110 may generate recommended navigation information about a navigation route of the ship, based on a departure time at the departure location of the ship, an arrival time at the arrival location of the ship, and location information about the locations.

The departure location and the arrival location may include any region or port within a sea area where the ship navigates, and the like, and are not limited to the above examples.

The navigation plan information may refer to information associated with a navigation plan of the ship. For example, the navigation plan information may include at least one of a departure time at the departure location of the ship, an arrival time at the arrival location of the ship, the latitude and longitude of the departure location, the latitude and longitude of the arrival location, and tank-related requirements for the ship at the arrival location.

Alternatively, the navigation plan information may be received via a user input, or may refer to preset information. For example, when a user sets a departure location and an arrival location of the ship, information corresponding to the set locations, such as an arrival time of the ship, the latitude and longitude of the departure location, the latitude and longitude of the arrival location, or tank-related requirements for the ship at the arrival location, may be received from preset information. However, the navigation plan information is not limited to the examples described above.

The recommended navigation information, which is information about a navigation route generated based on the navigation plan information, may include at least one of location information, speed information, and environmental information, all about the ship for each navigation section in the navigation route. The location information may include the latitude and longitude for each navigation section, the speed information may include a speed for each navigation section, and the environmental information may include, for each navigation section, at least one of weather/climate information, tidal current information, sea state information, and ocean current information.

In addition, the recommended navigation information may be information about a navigation route that is generated by considering a propulsion resistance and a BOG generation amount of the ship, which are calculated based on location-specific weather/climate information and sea state information obtained by using departure/arrival locations and departure/arrival times of the ship. However, the recommended navigation information is not limited to the examples described above.

The navigation route may be a route with the lowest fuel cost. For example, the navigation route may be a route where the propulsion resistance and the BOG generation amount of the ship are minimized, but is not limited thereto.

In addition, the processor 110 may obtain recommended navigation information as output data by inputting the navigation plan information to a recommended navigation information generation model. For example, the processor 110 may obtain recommended navigation information by inputting, to the recommended navigation information generation model, departure/arrival times of the ship for a location, and location information about departure/arrival locations. Here, the recommended navigation information generation model may be a model that includes information such as a performance function relating speed and fuel amount for a main engine of the ship, a performance function relating power amount and fuel amount for a generator engine of the ship, a performance function relating power amount and fuel amount for a compressor/pump/reliquefaction unit/gas combustion unit (GCU)/subcooler of the ship, or a performance function relating speed and power production for a shaft generator of the ship. As another example, the recommended navigation information may be obtained by using a navigation information generation model as will be described below, but is not limited to thereto.

In addition, based on the navigation plan information, the processor 110 may obtain environmental information about the navigation route of the ship. In addition, based on the navigation plan information and the environmental information, the processor 110 may generate recommended navigation information based on a fuel consumption amount and a BOG generation amount for the navigation route of the ship. For example, the processor 110 may generate recommended navigation information about a navigation route that minimizes the propulsion resistance and BOG generation amount of the ship, by obtaining location-specific weather/climate information and sea state information based on departure/arrival times of the ship, the latitude and longitude of departure/arrival locations, and tank-related requirements at the arrival location, and predicting a propulsion resistance and a BOG generation amount based on the departure/arrival times of the ship, the latitudes and longitudes of the departure/arrival locations, the tank-related requirements at the arrival location, and the location-specific weather/climate information and sea state information.

In addition, based on the recommended navigation information, the processor 110 may predict a BOG generation amount of the ship and a tank pressure value of the ship. In detail, the processor 110 may predict a BOG generation amount of the ship based on at least one of location information for each navigation section, speed information for each navigation section, and environmental information for each navigation section. In addition, the processor 110 may predict a tank pressure value of the ship based on at least one of location information for each navigation section, speed information for each navigation section, environmental information for each navigation section, and a preset liquefied gas consumption amount.

In addition, the processor 110 may obtain a BOG generation amount of the ship by using a prediction model. For example, the processor 110 may obtain a BOG generation amount of the ship as output data by inputting, to the prediction model, location information for each navigation section, speed information for each navigation section, and environmental information for each navigation section. As another example, the processor 110 may obtain a BOG generation amount prediction value by using a BOG generation amount prediction model, which will be described below.

In addition, the processor 110 may obtain a tank pressure value of the ship by using a prediction model. For example, the processor 110 may obtain a tank pressure value of the ship as output data by inputting, to the prediction model, location information for each navigation section, speed information for each navigation section, environmental information for each navigation section, and a preset liquefied gas consumption amount. As another example, the processor 110 may obtain a tank pressure value by using a tank pressure prediction model, which will be described below.

The liquefied gas consumption amount may be derived based on a gas consumption amount of a main engine, a gas consumption amount of a generator engine, a gas consumption amount of a GCU, and a gas consumption amount of a reliquefaction unit. For example, the liquefied gas consumption amount may be the sum of at least one of a gas consumption amount of a main engine, a gas consumption amount of a generator engine, a gas consumption amount of a GCU, a gas consumption amount of a reliquefaction unit, a gas consumption amount of a compressor, and a gas consumption amount of a pump. As another example, the liquefied gas consumption amount may be the sum of a gas consumption amount of the ship itself and a gas consumption amount of equipment installed on the ship, but is not limited thereto.

In addition, based on the BOG generation amount and the tank pressure value, the processor 110 may obtain optimal navigation information associated with operation control of the ship. For example, based on a minimum liquefied gas consumption during a voyage, the processor 110 may predict a speed of the ship for each section and an amount of use of equipment installed on the ship. Here, the equipment may include a main engine, a generator engine, a GCU, a reliquefaction unit, a shaft generator, a subcooler, and the like, that are installed on the ship. In addition, the processor 110 may calculate a fuel amount of the main engine of the ship based on the predicted speed of the ship for each section, and calculate a gas consumption amount of the equipment based on the predicted amount of use of the equipment. In addition, based on the calculated fuel amount of the main engine and the calculated gas consumption amount of the equipment, the processor 110 may determine a liquefied gas consumption amount. Finally, the processor may obtain optimal navigation information including the BOG generation amount of the ship, the tank pressure value of the ship, the speed of the ship for each navigation section, the liquefied gas consumption amount of the ship, and the amount of use of equipment installed on the ship.

In addition, based on the BOG generation amount and the tank pressure value, the processor 110 may generate n-th intermediate navigation information associated with operation control of the ship. In addition, based on a comparison between the n-th intermediate navigation information and (n+1)-th intermediate navigation information, the processor 110 may confirm the (n+1)-th intermediate navigation information as optimal navigation information according to a preset threshold value. Here, n may be a natural number greater than or equal to 1.

A method of generating the n-th intermediate navigation information may be identical to the method of generating the optimal navigation information described above. The intermediate navigation information may include the BOG generation amount of the ship, the tank pressure value of the ship, the speed of the ship for each navigation section, the liquefied gas consumption amount of the ship, and the amount of use of equipment installed on the ship. For example, the processor 110 may predict a speed of the ship for each section and an amount of use of equipment installed on the ship such that the liquefied gas consumption amount of the ship during a voyage is minimized. Here, the equipment may include a main engine, a generator engine, a GCU, a reliquefaction unit, a shaft generator, a subcooler, and the like, that are installed on the ship. In addition, the processor 110 may calculate a fuel amount of the main engine of the ship based on the predicted speed of the ship for each section, and calculate a gas consumption amount of the equipment based on the predicted amount of use of the equipment. In addition, based on the calculated fuel amount of the main engine and the calculated gas consumption amount of the equipment, the processor 110 may determine a liquefied gas consumption amount. Finally, the processor may obtain first intermediate navigation information including the BOG generation amount of the ship, the tank pressure value of the ship, the speed of the ship for each navigation section, the liquefied gas consumption amount of the ship, and the amount of use of equipment installed on the ship. However, the method of obtaining the intermediate navigation information is not limited to the example described above.

The (n+1)-th intermediate navigation information may be generated based on an updated value of at least one of speed information for each navigation section and the liquefied gas consumption amount, which are included in the n-th intermediate navigation information. For example, the (n+1)-th intermediate navigation information may be obtained by predicting a BOG generation amount of the ship and a tank pressure value of the ship based on an updated value for speed information for each navigation section that is included in the n-th intermediate navigation information as described above, and obtaining the (n+1)-th intermediate navigation information associated with operation control of the ship, based on the predicted BOG generation amount and tank pressure value. Here, the updated value for the speed information for each navigation section may correspond to a speed for each navigation section that is included in the (n+1)-th intermediate navigation information.

The processor 110 may predict a BOG generation amount of the ship and a tank pressure value of the ship by using, as an updated value, at least one of the speed for each navigation section and the liquefied gas consumption amount that are included in the n-th intermediate navigation information, and obtain the (n+1)-th intermediate navigation information associated with operation control of the ship, based on the predicted BOG generation amount and tank pressure value.

In addition, in response to a difference value, which is calculated based on the n-th intermediate navigation information and the (n+1)-th intermediate navigation information, being less than or equal to a preset threshold value, the processor 110 may confirm the (n+1)-th intermediate navigation information as optimal navigation information. In addition, in response to the difference value being greater than the preset threshold value, the processor 110 may generate (n+2)-th intermediate navigation information by updating at least one of the speed information for each navigation section and the liquefied gas consumption amount that are included in the (n+1)-th intermediate navigation information.

In addition, the processor 110 may control the ship according to a preset operating mode by using the optimal navigation information. Here, the operating mode may include an operating mode that minimizes the liquefied gas consumption amount of the ship.

Each of the generation model and prediction model described above may be a trained machine learning model. For example, the prediction model may be a deep learning model using an artificial neural network.

A machine learning model refers to a statistical learning algorithm implemented based on the structure of a biological neural network, or a structure for executing the algorithm, in machine learning technology and cognitive science.

For example, the machine learning model may refer to a machine learning model that obtains a problem-solving ability by repeatedly adjusting the weights of synapses by nodes that are artificial neurons forming a network in combination with the synapses as in biological neural network, to learn such that an error between a correct output corresponding to a particular input and an inferred output is reduced. For example, the machine learning model may include an arbitrary probability model, a neural network model, etc., used in artificial intelligence learning methods, such as machine learning or deep learning.

For example, the machine learning model may be implemented as a multilayer perceptron (MLP) composed of multilayer nodes and connections therebetween. The machine learning model according to an embodiment of the present disclosure may be implemented by using one of various artificial neural network model structures including MLPs. For example, the machine learning model may include an input layer that receives an input signal or data from the outside, an output layer that outputs an output signal or data corresponding to the input data, and one or more hidden layers between the input layer and the output layer to receive a signal from the input layer, extract features, and deliver the features to the output layer. The output layer receives a signal or data from the hidden layer and outputs the signal or data to the outside.

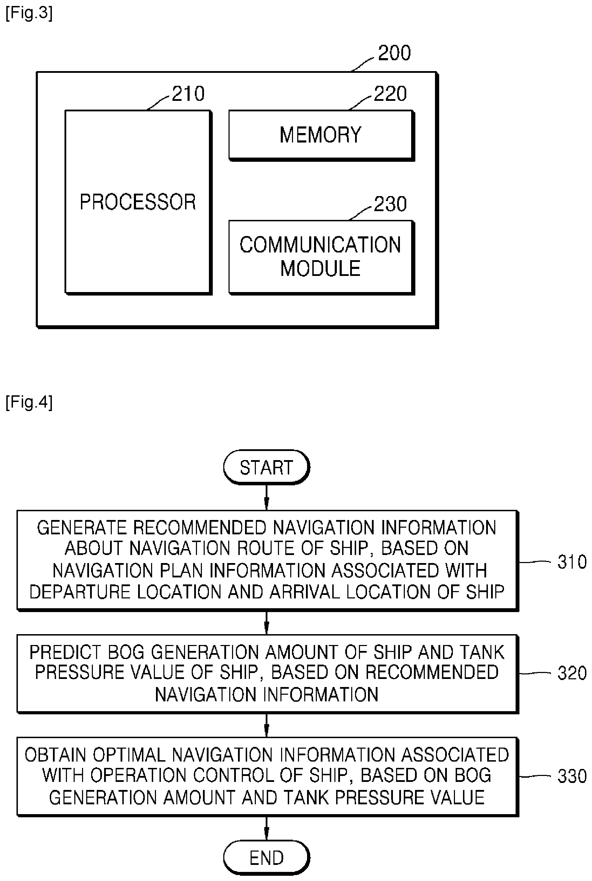

Detailed examples in which the processor 110 according to an embodiment operates will be described with reference to FIGS. 4 to 36.

The processor 110 may be implemented as an array of a plurality of logic gates, or may be implemented as a combination of a general-purpose microprocessor and a memory storing a program executable by the microprocessor. For example, the processor 110 may include a general-purpose processor, a central processing unit (CPU), a microprocessor, a digital signal processor (DSP), a controller, a microcontroller, a state machine, and the like. In some environments, the processor 110 may include an application-specific integrated circuit (ASIC), a programmable logic device (PLD), a field-programmable gate array (FPGA), and the like. For example, processor 110 may refer to a combination of processing devices, such as a combination of a DSP and a microprocessor, a combination of a plurality of microprocessors, a combination of one or more microprocessors combined with a DSP core, or a combination of any other such configurations.

The memory 120 may include any non-transitory computer-readable recording medium. For example, the memory 120 may include a permanent mass storage device, such as random-access memory (RAM), read-only memory (ROM), a disk drive, a solid-state drive (SSD), or flash memory. As another example, the permanent mass storage device, such as ROM, an SSD, flash memory, or a disk drive, may be a permanent storage device separate from the memory. In addition, the memory 120 may store an operating system (OS) and at least one piece of program code (e.g., code for the processor 110 to perform an operation to be described below with reference to FIGS. 4 to 36).

These software components may be loaded from a computer-readable recording medium separate from the memory 120. The separate computer-readable recording medium may be a recording medium that may be directly connected to the user terminal 100, and may include, for example, a computer-readable recording medium, such as a floppy drive, a disk, a tape, a digital video disc (DVD)/compact disc ROM (CD-ROM) drive, or a memory card. Alternatively, the software components may be loaded into the memory 120 through the communication module 140 rather than a computer-readable recording medium. For example, at least one program may be loaded to the memory 120 based on a computer program (e.g., a computer program for the processor 110 to perform an operation to be described below with reference to FIGS. 4 to 9) installed by files provided by developers or a file distribution system that provides an installation file of an application, through the communication module 140.

The input/output interface 130 may be a unit for an interface with a device (e.g., a keyboard or a mouse) for input or output that may be connected to the user terminal 100 or included in the user terminal 100. The input/output interface 130 may be implemented separately from the processor 110, but is not limited thereto, and may be implemented to be included in the processor 110.

The communication module 140 may provide a configuration or function for the server 20 and the user terminal 100 to communicate with each other through a network. In addition, the communication module 140 may provide a configuration or function for the user terminal 100 to communicate with another external device. For example, a control signal, a command, data, and the like provided under control of the processor 110 may be transmitted to the server 20 and/or an external device through the communication module 140 and a network.

In addition, although not illustrated in FIG. 2, the user terminal 100 may further include a display device. For example, the display device may be implemented as a touch screen. Alternatively, the user terminal 100 may be connected to an independent display device in a wired or wireless communication manner to transmit and receive data to and from the display device. For example, recommended navigation information, optimal navigation information, or the like may be provided via the display device.

FIG. 3 is a configuration diagram illustrating an example of a server according to an embodiment.

Referring to FIG. 3, a server 200 includes a processor 210, a memory 220, and a communication module 230. For convenience of description, FIG. 3 illustrates only components associated with the present disclosure. Thus, the server 200 may further include other general-purpose components, in addition to the components illustrated in FIG. 3. In addition, it is obvious to those of skill in the art related to the present disclosure that the processor 210, the memory 220, and the communication module 230 illustrated in FIG. 3 may also be implemented as independent devices.

Based on navigation plan information associated with a departure location and an arrival location of the ship, the processor 210 may generate recommended navigation information about a navigation route of the ship. In addition, based on the recommended navigation information, the processor 210 may predict a BOG generation amount of the ship and a tank pressure value of the ship. In addition, based on the BOG generation amount and the tank pressure value, the processor 210 may obtain optimal navigation information associated with operation control of the ship. In addition, the processor 210 may control the ship according to a preset operating mode by using the optimal navigation information.

In other words, at least one of the operations of the processor 110 described above with reference to FIG. 2 may be performed by the processor 210. In this case, the user terminal 100 may output, via the display device, information transmitted from the server 200.

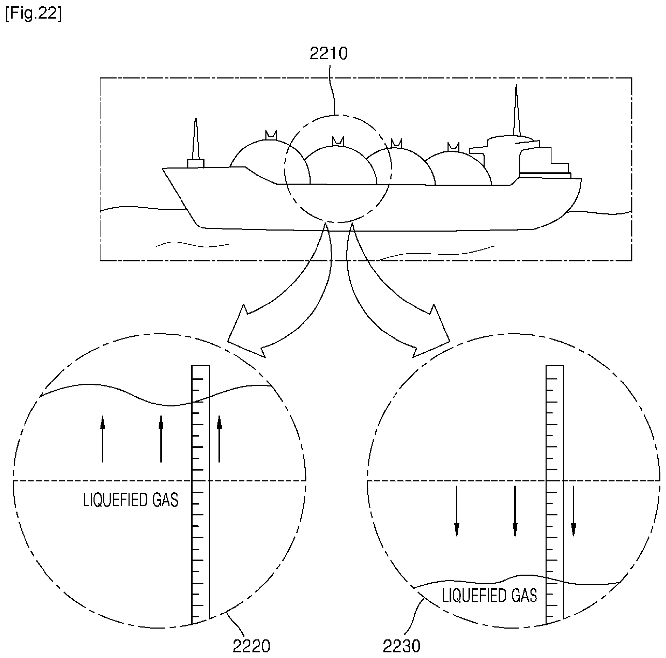

Meanwhile, an implementation example of the processor 210 is the same as that of the processor 110 described above with reference to FIG. 22, and thus, detailed descriptions thereof will be omitted.

The memory 220 may store various pieces of data, such as data necessary for an operation of the processor 210 or data generated according to an operation of the processor 210. In addition, the memory 220 may store an OS and at least one program (e.g., a program necessary for an operation of the processor 210).

Meanwhile, an implementation example of the memory 220 is the same as that of the memory 120 described above with reference to FIG. 2, and thus, detailed descriptions thereof will be omitted.

The communication module 230 may provide a configuration or function for the server 200 and the user terminal 100 to communicate with each other through a network. In addition, the communication module 140 may provide a configuration or function for the server 200 to communicate with another external device. For example, a control signal, a command, data, and the like provided under control of the processor 210 may be transmitted to the user terminal 100 and/or an external device through the communication module 230 and a network.

FIG. 4 is a flowchart for describing an example of a method of optimizing navigation of a ship, according to an embodiment.

Referring to FIG. 4, the method of optimizing navigation of a ship includes operations that are processed, in a time-series manner, by the user terminal 10 or 100 or the processor 110 illustrated in FIGS. 1 and 2. Thus, the descriptions provided above regarding the user terminal 10 or 100 or the processor 110 illustrated in FIGS. 1 and 2, which are even omitted below, may also be applied to the method of optimizing navigation of a ship of FIG. 4.

In addition, as described above with reference to FIGS. 1 and 3, at least one of operations of the method of optimizing navigation of a ship illustrated in FIG. 4 may be processed by the server 20 or 200 or the processor 210.

In operation 310, based on navigation plan information associated with a departure location and an arrival location of the ship, the processor 110 generates recommended navigation information about a navigation route of the ship.

For example, the processor 110 may generate the recommended navigation information as output data by inputting, to a recommended navigation information generation model, a departure time at the departure location of the ship, an arrival time at the arrival location of the ship, the latitude and longitude of the departure location, and the latitude and longitude of the arrival location. The recommended navigation information generation model, which includes information such as a performance function relating speed and fuel amount for a main engine of the ship, a performance function relating power amount and fuel amount for a generator engine of the ship, a performance function relating power amount and fuel amount for a compressor/pump/reliquefaction unit/gas combustion unit (GCU)/subcooler of the ship, or a performance function relating speed and power production for a shaft generator of the ship, may derive a route with the lowest fuel cost by analyzing the resistance performance of the ship according to the propulsion resistance of the ship. Here, the fuel cost may refer to the amount of fuel the ship consumes per unit travel distance or per unit time.

As another example, the processor 110 may generate recommended navigation information about a navigation route that minimizes the propulsion resistance and the BOG generation amount of the ship, by obtaining location-specific weather/climate information and sea state information based on a departure time at the departure location of the ship, an arrival time at the arrival location of the ship, the latitude and longitude of the departure location, the latitude and longitude of the arrival location, and tank-related requirements at the arrival location, and predicting a propulsion resistance and a BOG generation amount of the ship based on the departure/arrival times of the ship, the latitudes and longitudes of the departure/arrival locations, the tank-related requirements at the arrival location, the location-specific weather/climate information and sea state information.

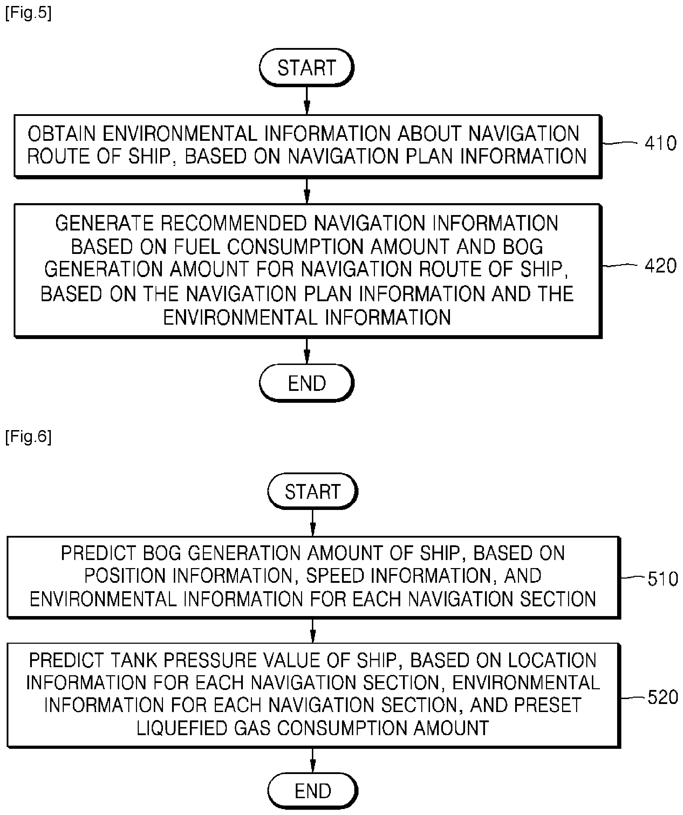

Hereinafter, an example in which the processor generates recommended navigation information based on navigation plan information will be described with reference to FIG. 5.

FIG. 5 is a flowchart for describing an example in which a processor generates recommended navigation information based on navigation plan information, according to an embodiment.

Referring to FIG. 5, in operation 410, based on the navigation plan information, the processor 110 obtains environmental information about a navigation route of the ship. For example, the processor 110 may obtain environmental information about a route of the ship, based on at least one of a departure time at a departure location of the ship, an arrival time at an arrival location of the ship, the latitude and longitude of the departure location, the latitude and longitude of the arrival location, and tank-related requirements for the ship at the arrival location.

Here, the environmental information may include at least one of weather/climate information, tidal current information, sea state information, and ocean current information, for each location included in a navigation route of the ship. In addition, the environmental information may refer to information about the environment along the navigation route of the ship, and is not limited to the examples described above.

In operation 420, based on the navigation plan information and the environmental information, the processor 110 generates recommended navigation information based on a fuel consumption amount and a BOG generation amount for the navigation route of the ship. For example, the processor 110 may generate recommended navigation information about a navigation route that minimizes the propulsion resistance and the BOG generation amount of the ship, by predicting a propulsion resistance and a BOG generation amount of the ship based on departure/arrival times of the ship, the latitudes and longitudes of the departure/arrival locations, the tank-related requirements at the arrival location, and the location-specific weather/climate information and sea state information. Here, when predicting the BOG generation amount, the processor 110 may predict the BOG generation amount by considering changes in ambient air temperature.

Referring again to FIG. 4, in operation 320, based on the recommended navigation information, the processor 110 predicts a BOG generation amount of the ship and a tank pressure value of the ship. The obtained BOG generation amount and tank pressure value may be time-series data for each navigation section, but are not limited thereto.

For example, the processor 110 may predict the BOG generation amount of the ship based on location information and speed information for each navigation section included in the recommended navigation information, and predict the tank pressure value of the ship based on a preset liquefied gas consumption amount.

As another example, the processor 110 may obtain a BOG generation amount of the ship and a tank pressure value of the ship by using a prediction model.

However, the method of obtaining a BOG generation amount of the ship and a tank pressure value of the ship is not limited to the examples described above.

Hereinafter, an example in which the processor predicts a BOG generation amount of the ship and a tank pressure value of the ship based on recommended navigation information will be described with reference to FIG. 6.

FIG. 6 is a flowchart for describing an example in which a processor predicts a BOG generation amount and a tank pressure value of a ship based on recommended navigation information, according to an embodiment.

Referring to FIG. 6, in operation 510, the processor 110 predicts a BOG generation amount of the ship, based on location information for each navigation section, speed information for each navigation section, and environmental information for each navigation section.

For example, the processor 110 may obtain a BOG generation amount of the ship as output data by inputting, to a prediction model, location information for each navigation section, speed information for each navigation section, and environmental information for each navigation section. As another example, the processor 110 may obtain a BOG generation amount by using a BOG generation amount prediction model, which will be described below. Here, the BOG generation amount prediction model includes a plurality of deep learning models, and predicts a BOG generation amount over time by using navigation data of the ship. In addition, the BOG generation amount prediction model may include a plurality of deep learning models corresponding to a plurality of navigation modes according to the liquefied gas level within a tank, respectively. However, the method of obtaining the BOG generation amount is not limited to the examples described above.

In operation 520, the processor 110 predicts a tank pressure value of the ship, based on location information for each navigation section, environmental information for each navigation section, and a preset liquefied gas consumption amount.

For example, the processor 110 may obtain a tank pressure value of the ship as output data by inputting, to a prediction model, location information for each navigation section, speed information for each navigation section, environmental information for each navigation section, and a preset liquefied gas consumption amount. As another example, the processor 110 may obtain a tank pressure value by using a tank pressure prediction model, which will be described below. Here, the tank pressure prediction model outputs a tank pressure prediction value of the ship over time. In addition, the tank pressure prediction model may include a plurality of deep learning models corresponding to a plurality of navigation modes according to the liquefied gas level within a tank, respectively. However, the method of obtaining the tank pressure value is not limited to the examples described above.

Referring again to FIG. 4, in operation 330, based on the BOG generation amount and the tank pressure value, the processor 110 obtains optimal navigation information associated with operation control of the ship.

For example, based on a minimum liquefied gas consumption during a voyage, the processor 110 may predict a speed of the ship for each section and an amount of use of equipment installed on the ship. In addition, the processor 110 may calculate a fuel amount of the main engine of the ship based on the predicted speed of the ship for each section, and calculate a gas consumption amount of equipment based on the predicted amount of use of the equipment. In addition, based on the calculated fuel amount of the main engine and the calculated gas consumption amount of the equipment, the processor 110 may determine a liquefied gas consumption amount. Finally, the processor may obtain optimal navigation information including the BOG generation amount of the ship, the tank pressure value of the ship, the speed of the ship for each navigation section, the liquefied gas consumption amount of the ship, and the amount of use of equipment installed on the ship.

As another example, the processor 110 may generate optimal navigation information that considers constraints, by using an operation optimization model, which will be described below.

However, the method of generating the optimal navigation information is not limited to the examples described above.

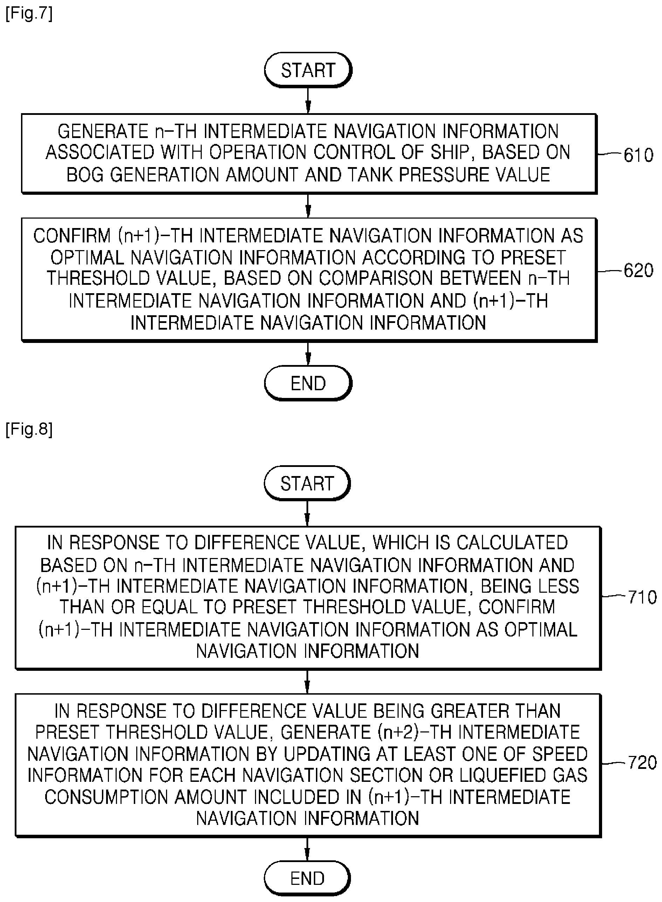

Hereinafter, an example in which the processor obtains optimal navigation information based on a BOG generation amount and a tank pressure value will be described with reference to FIG. 7.

FIG. 7 is a flowchart for describing an example in which a processor obtains optimal navigation information based on a BOG generation amount and a tank pressure value, according to an embodiment.

Referring to FIG. 7, in operation 610, based on a BOG generation amount and a tank pressure value, the processor 110 generates n-th intermediate navigation information associated with operation control of the ship.

For example, the processor 110 may predict a speed of the ship for each section and an amount of use of equipment installed on the ship such that the liquefied gas consumption amount of the ship during a voyage is minimized. Here, the equipment may include a main engine, a generator engine, a GCU, a reliquefaction unit, a shaft generator, a subcooler, and the like, that are installed on the ship. In addition, the processor 110 may calculate a fuel amount of the main engine of the ship based on the predicted speed of the ship for each section, and calculate a gas consumption amount of the equipment based on the predicted amount of use of the equipment. In addition, based on the calculated fuel amount of the main engine and the calculated gas consumption amount of the equipment, the processor 110 may determine a liquefied gas consumption amount. Finally, the processor may obtain n-th intermediate navigation information including the BOG generation amount of the ship, the tank pressure value of the ship, the speed of the ship for each navigation section, the liquefied gas consumption amount of the ship, and the amount of use of equipment installed on the ship.

As another example, the processor 110 may generate n-th intermediate navigation information that considers constraints, by using an operation optimization model, which will be described below.

However, the method of generating the n-th intermediate navigation information is not limited to the examples described above.

In operation 620, based on a comparison between the n-th intermediate navigation information and (n+1)-th intermediate navigation information, the processor 110 confirms the (n+1)-th intermediate navigation information as optimal navigation information according to a preset threshold value.

For example, based on a comparison between the speed for each section included in the n-th intermediate navigation information and the speed for each section included in the (n+1)-th intermediate navigation information, the processor 110 may confirm the (n+1)-th intermediate navigation information as the optimal navigation information according to a preset threshold value.

As another example, based on a comparison between the liquefied gas consumption amount included in the n-th intermediate navigation information and the liquefied gas consumption amount included in the (n+1)-th intermediate navigation information, the processor 110 may confirm the (n+1)-th intermediate navigation information as the optimal navigation information according to a preset threshold value.

However, the method of confirming the optimal navigation information is not limited to the examples described above.

Hereinafter, an example in which the processor obtains optimal navigation information based on a BOG generation amount and a tank pressure value will be described with reference to FIG. 8.

FIG. 8 is a flowchart for describing another example in which a processor obtains optimal navigation information based on a BOG generation amount and a tank pressure value, according to an embodiment.

Referring to FIG. 8, in operation 710, in response to a difference value, which is calculated based on n-th intermediate navigation information and (n+1)-th intermediate navigation information, being less than or equal to a preset threshold value, the processor 110 confirms the (n+1)-th intermediate navigation information as optimal navigation information.

For example, the processor 110 may calculate a difference value based on a speed for each section included in the n-th intermediate navigation information and a speed for each section included in the (n+1)-th intermediate navigation information. Then, in response to the calculated difference value being less than or equal to 0.01, the processor 110 may confirm the (n+1)-th intermediate navigation information as the optimal navigation information.

As another example, the processor 110 may calculate a difference value based on a liquefied gas consumption amount included in the n-th intermediate navigation information and a liquefied gas consumption amount included in the (n+1)-th intermediate navigation information. Then, in response to the calculated difference value being less than or equal to 0.01, the processor 110 may confirm the (n+1)-th intermediate navigation information as the optimal navigation information.

However, the method of confirming the optimal navigation information is not limited to the examples described above.

In operation 720, in response to the difference value being greater than the preset threshold value, the processor 110 generates (n+2)-th intermediate navigation information by updating at least one of the speed information for each navigation section or the liquefied gas consumption amount included in the (n+1)-th intermediate navigation information.

For example, when the difference value between the speed for each section included in in the n-th intermediate navigation information and the speed for each section included in in the (n+1)-th intermediate navigation information is greater than 0.01, the processor 110 may generate (n+2)-th intermediate navigation information by updating the speed for each navigation section included in the (n+1)-th intermediate navigation information. Based on the speed for each navigation section included in the (n+1)-th intermediate navigation information, the processor 110 may predict a BOG generation amount of the ship and a tank pressure value of the ship as described above, and obtain (n+2)-th intermediate navigation information associated with operation control of the ship based on the predicted BOG generation amount and tank pressure value. Here, as the speed for each navigation section is updated, the gas consumption amount of the main engine according to the speed of the ship, and the gas consumption amount of the generator engine are updated, and thus, the liquefied gas consumption amount is also updated. That is, the (n+2)-th intermediate navigation information may be information generated based on updated values of the speed for each section and the liquefied gas consumption amount.

As another example, when the difference value between the liquefied gas consumption amount included in the n-th intermediate navigation information and the liquefied gas consumption amount included in the (n+1)-th intermediate navigation information is greater than 0.01, the processor 110 may generate (n+2)-th intermediate navigation information by updating the liquefied gas consumption amount included in the (n+1)-th intermediate navigation information. Based on the liquefied gas consumption amount included in the (n+1)-th intermediate navigation information, the processor 110 may predict a tank pressure value of the ship as described above, and obtain (n+2)-th intermediate navigation information associated with operation control of the ship, based on the predicted BOG generation amount and tank pressure value. That is, the (n+2)-th intermediate navigation information may be information generated based on an updated value of the liquefied gas consumption amount.

The preset value described above may be a value set by a user or developer, or may be a value obtained by the processor 110 as n-th intermediate navigation information is repeatedly generated. For example, the processor 110 may obtain optimal navigation information, set a ground-truth value corresponding to the optimal navigation information, and obtain the preset value in correspondence with the optimal navigation information and the ground-truth value. As another example, the processor 110 may obtain optimal navigation information, calculate, by using a loss function, an error in correspondence with the optimal navigation information and a ground-truth value corresponding to the optimal navigation information, and obtain the preset value based on the calculated error.

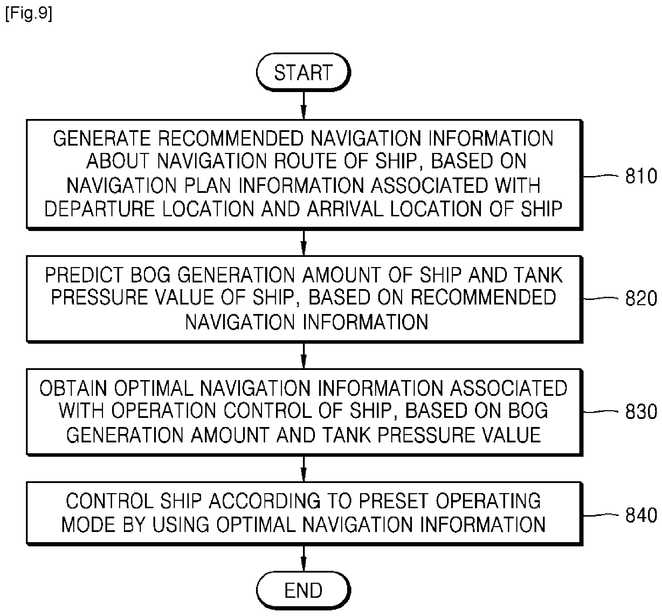

Hereinafter, another example of the method of optimizing navigation of a ship will be described with reference to FIG. 9.

FIG. 9 is a flowchart for describing another example of a method of optimizing navigation of a ship, according to an embodiment.

Operations 810 to 830 of FIG. 9 correspond to operations 310 to 330 of the FIG. 4, respectively. Thus, redundant descriptions of operations 810 to 830 will be omitted below.

In operation 840, the processor 110 controls the ship according to a preset operating mode by using the optimal navigation information. Here, the operating mode may include an operating mode that minimizes the liquefied gas consumption amount of the ship.

In obtaining the optimal navigation information, the processor 110 may predict a speed of the ship for each section and an amount of use of equipment installed on the ship, based on a minimum liquefied gas consumption amount during a voyage, calculate a fuel amount for the main engine of the ship based on the predicted speed of the ship for each section, and calculate a gas consumption amount of the equipment based on the predicted amount of use of the equipment. In addition, based on the calculated fuel amount of the main engine and the calculated gas consumption amount of the equipment, the processor 110 may determine a liquefied gas consumption amount. Thus, a BOG generation amount of the ship, a tank pressure value of the ship, a speed of the ship for each navigation section, a liquefied gas consumption amount of the ship, and an amount of use of equipment installed on the ship, which are included in the optimal navigation information, may be values generated based on a minimum liquefied gas consumption amount during a voyage. That is, when controlling the ship by using the optimal navigation information obtained via the method described above, the processor 110 may control the ship according to an operating mode that minimizes the liquefied gas consumption amount of the ship.

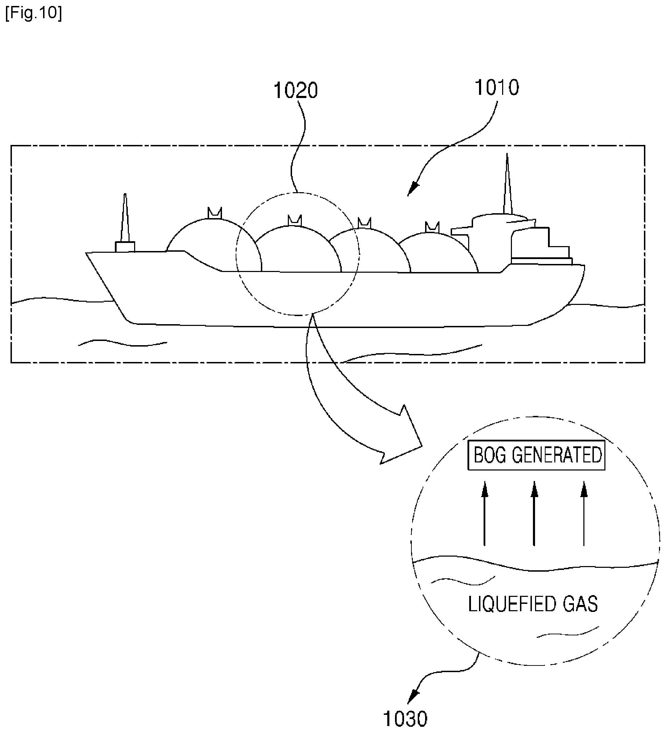

FIG. 10 is a diagram for describing an example of a method of predicting a BOG generation amount, according to an embodiment.

Referring to FIG. 10, an example of a ship 1010 including at least one tank 1020 is illustrated. During navigation of the ship 1010, BOG may be generated within the tank 1020 (1030).

Methods of handling BOG include a method that uses BOG as fuel for a main engine or a generator engine, a method that reliquefies BOG, a method that incinerates BOG by using a GCU, and the like. To handle BOG efficiently by using the above methods, it is necessary to predict a BOG generation amount.

In the related art, accurately predicting a BOG generation amount has been challenging, as it constantly changes depending on weather conditions along a navigation route, a temperature, sloshing, and the like.

According to a method of predicting a BOG generation amount of a ship according to an embodiment, input data for a BOG generation amount prediction model is selected from navigation data of the ship 1010. Then, the BOG generation amount prediction model is trained by using the input data, and a BOG generation amount is predicted via the trained prediction model.

Thus, navigation of a liquefied gas carrier may be possible while meeting a BOG generation amount guaranteed by a freight transport contract. Furthermore, because weather conditions change during the navigation of the ship, a correlation between the BOG generation amount from the ship and the weather conditions may be derived.

Hereinafter, a method and device for predicting a BOG generation amount of a ship, according to an embodiment of the present disclosure, will be described in detail with reference to FIG. 2 and FIGS. 11 to 17.

Referring to FIG. 2, the communication module 140 may receive, from an external server or an external device, information about existing navigation data, information about current navigation data, weather information, and the like. In addition, the memory 120 may store various pieces of data, such as existing navigation data, current navigation data, weather information, or data generated according to an operation of the processor 110.

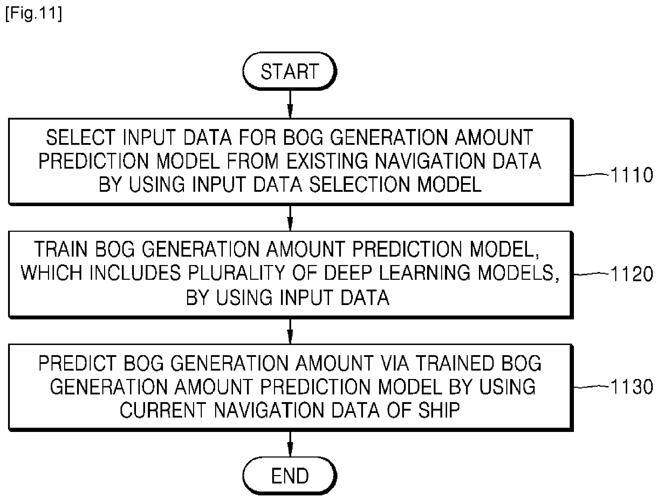

The processor 110 may control the operation of the device 100 by executing programs stored in the memory 120. For example, the processor 110 may perform at least some operations of the method of predicting a BOG generation amount of a ship, which will be described with reference to FIGS. 11 to 17.

In other words, the processor 110 may select input data for a BOG generation amount prediction model from existing navigation data by using an input data selection model, train the BOG generation amount prediction model, which includes a plurality of deep learning models, by using the selected input data, and predict a BOG generation amount via the trained BOG generation amount prediction model by using current navigation data of the ship.

The processor 110 may select input data for the BOG generation amount prediction model from existing navigation data by using the input data selection model.

For example, the processor 110 may calculate correlation coefficients between a portion of pre-stored navigation data and a BOG generation amount, train the input data selection model by using the calculated coefficients, and select, as input data, data having a correlation coefficient greater than or equal to a predetermined value, by using the trained input data selection model.

In addition, at least one of the plurality of deep learning models may include a stacking model, which may include a plurality of sub-deep learning models.

The processor 110 may train the BOG generation amount prediction model, which includes the plurality of deep learning models, by using the input data. For example, the processor 110 may calculate ground-truth data for training, perform training by using the input data and the calculated ground-truth data, and validate the BOG generation amount prediction model by using another portion of the pre-stored navigation data.

Here, the ground-truth data may be calculated by using at least one of a gas consumption amount, a gas temperature change value, and an insulation material temperature change value.

The processor 110 may predict a BOG generation amount via the trained BOG generation amount prediction model by using the current navigation data of the ship. For example, the processor 110 may output initial BOG generation amount prediction values from the plurality of deep learning models, respectively, and calculate a final BOG generation amount prediction value by applying different weights to the initial BOG generation amount prediction values, respectively.

Here, the processor 110 may apply the highest weight to the initial BOG generation amount prediction value that is output from the stacking model, among the initial BOG generation amount prediction values.

Hereinafter, the method of predicting a BOG generation amount of a ship, according to an embodiment of the present disclosure, will be described in detail with reference to FIGS. 11 to 17.

FIG. 11 is a flowchart for describing an example of a method of predicting a BOG generation amount of a ship, according to an embodiment.

Referring to FIG. 11, the method of predicting a BOG generation amount of a ship may include operations 1110 to 1130. However, the present disclosure is not limited thereto, and other general-purpose operations, in addition to those illustrated in FIG. 11, may be further included in the method of predicting a BOG generation amount of a ship. In addition, as described above with reference to FIGS. 2 and 10, at least one of the operations of the flowchart illustrated in FIG. 11 may be processed by the processor 110.

In operation 1110, the processor 110 may select input data for a BOG generation amount prediction model from existing navigation data by using an input data selection model.

For example, the processor 110 may calculate correlation coefficients between the existing navigation data and a BOG generation amount, train the input data selection model by using the calculated coefficients, and select, as input data, data having a correlation coefficient greater than or equal to a predetermined value, by using the trained input data selection model.

First, the processor 110 calculates the correlation coefficients. For example, the processor 110 may calculate linear correlation coefficients between the existing navigation data and the BOG generation amount. Then, the processor 110 may use data, from the existing navigation data, having a linear correlation coefficient greater than or equal to 0.1, as training data for the input data selection model. Here, the linear correlation coefficient may refer to a Pearson correlation coefficient. The Pearson correlation coefficient refers to the value obtained by dividing the covariance of two variables by the product of their standard deviations. However, examples of linear correlation coefficients calculated by the processor 110 are not limited to the Pearson correlation coefficient described above.

The processor 110 trains the input data selection model. For example, the processor 110 may select the input data from the existing navigation data by using the trained input data selection model.

Here, a deep learning model refers to a set of machine learning algorithms, used in machine learning and cognitive science, that employ hierarchical algorithm structures based on deep neural networks.

For example, a deep learning model may include an input layer that receives an input signal or data from the outside, an output layer that outputs an output signal or data corresponding to the input data, and at least one hidden layer that is between the input layer and the output layer, and receives a signal from the input layer, extracts features, and delivers the features to the output layer. The output layer receives a signal or data from the hidden layer, and outputs the signal or data to the outside.

Thus, the input data selection model may be trained to receive a portion of pre-stored navigation data and extract data (e.g., a gas consumption amount) having a linear correlation coefficient greater than or equal to 0.1.

In addition, the processor 110 selects input data. For example, the processor 110 may select input data that includes a gas consumption amount, a cargo loading amount (e.g., a liquefied gas level within a tank), and the like. Here, the gas consumption amount may be calculated by using gas consumption amounts of a main Engine, a generator engine, a GCU, and a reliquefaction unit. In addition, the processor 110 may select input data that includes a gas consumption amount, a cargo loading amount (e.g., a liquefied gas level within a tank), a sea temperature, an air temperature, an air pressure, a ship speed, a wave height, a swell height, and the like.

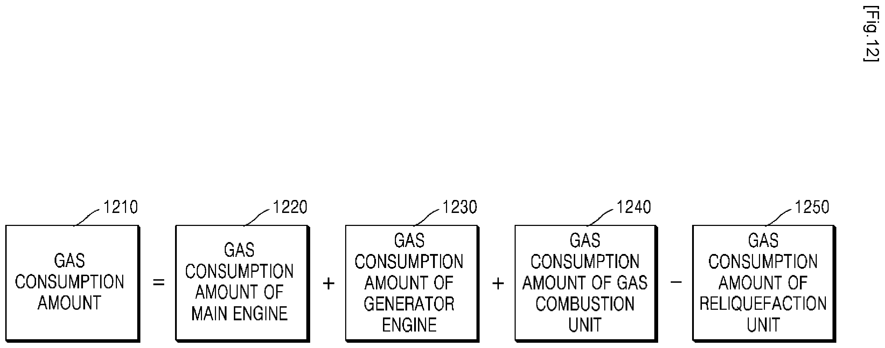

Hereinafter, an example in which the processor 110 calculates a gas consumption amount will be described with reference to FIG. 12.

FIG. 12 is a diagram for describing an example of calculating a gas consumption amount of a ship, according to an embodiment.

Referring to FIG. 12, the processor 110 calculates a gas consumption amount 1210 by using a gas consumption amount 1220 of a main engine, a gas consumption amount 1230 of a generator engine, a gas consumption amount 1240 of a GCU, and a gas consumption amount 1250 of a reliquefaction unit. For example, the difference between the gas consumption amount 1250 of the reliquefaction unit and the sum of the gas consumption amount 1220 of the main engine, the gas consumption amount 1230 of the generator engine, and the gas consumption amount 1240 of the GCU may be calculated.

In the related art, when using a gas vaporization amount as input data, it is impossible to accurately predict a BOG generation amount because information is lacking regarding whether the vaporized gas was used, discharged, or reliquefied.

Thus, by calculating the gas consumption amount 1210 instead of the gas vaporization amount and using it as input data, a BOG generation amount per unit time may be predicted, enabling efficient ship navigation. Furthermore, it may be confirmed in real time whether BOG generation amount conditions specified in a freight transport contract are satisfied.

Referring again to FIG. 11, in operation 1120, the processor 110 may train the BOG generation amount prediction model, which includes the plurality of deep learning models, by using the input data.

For example, at least one of the plurality of deep learning models may include a stacking model. In addition, the stacking model may include sub-deep learning models.

Here, the stacking model refers to an algorithm that uses output data from a plurality of sub-deep learning models as training data for one deep learning model.

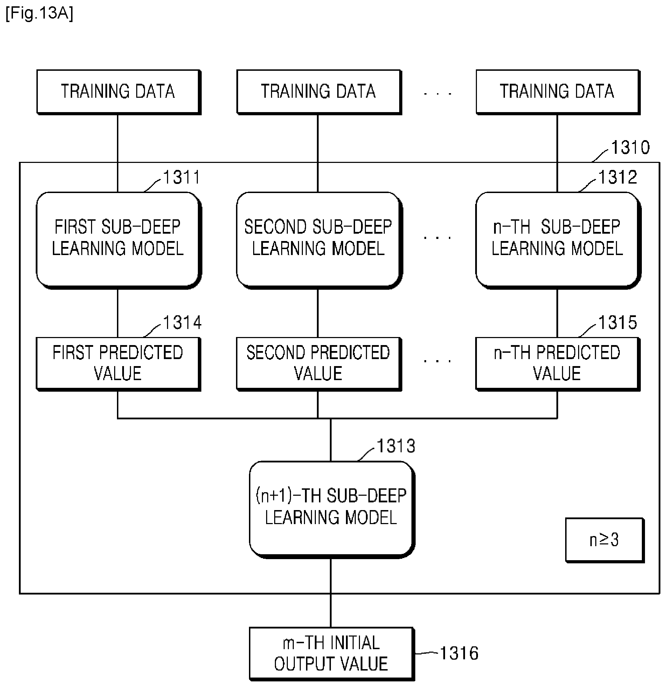

Hereinafter, an example of the BOG generation amount prediction model will be described with reference to FIGS. 13A to 13B.

FIG. 13A is a configuration diagram illustrating an example of a stacking model according to an embodiment.

Referring to FIG. 13A, a stacking model 1310 may include a first sub-deep learning model 1311 to an n-th sub-deep learning model 1312, and an (n+1)-th sub-deep learning model 1313. Here, n is a natural number greater than or equal to 3. For example, the first sub-deep learning model 1311 to the (n+1)-th sub-deep learning model 1313 may be identical deep learning models. In addition, the first sub-deep learning model 1311 to the (n+1)-th sub-deep learning model 1313 may be different deep learning models. As another example, at least one of the first sub-deep learning model 1311 to the n-th sub-deep learning model 1312 may include a plurality of deep learning models.

For example, the processor 110 trains the first sub-deep learning model 1311 to the n-th sub-deep learning model 1312 by using the same training data. From the trained sub-deep learning models 1311 and 1312, a first prediction value 1314 to an n-th prediction value 1315 are output. The output first prediction value 1314 to the n-th prediction value 1315 are used as training data for the (n+1)-th sub-deep learning model 1313. In addition, output data from the (n+1)-th sub-deep learning model 1313 is used as an m-th initial output value 1316 of the BOG generation amount prediction model for the ship 1010.

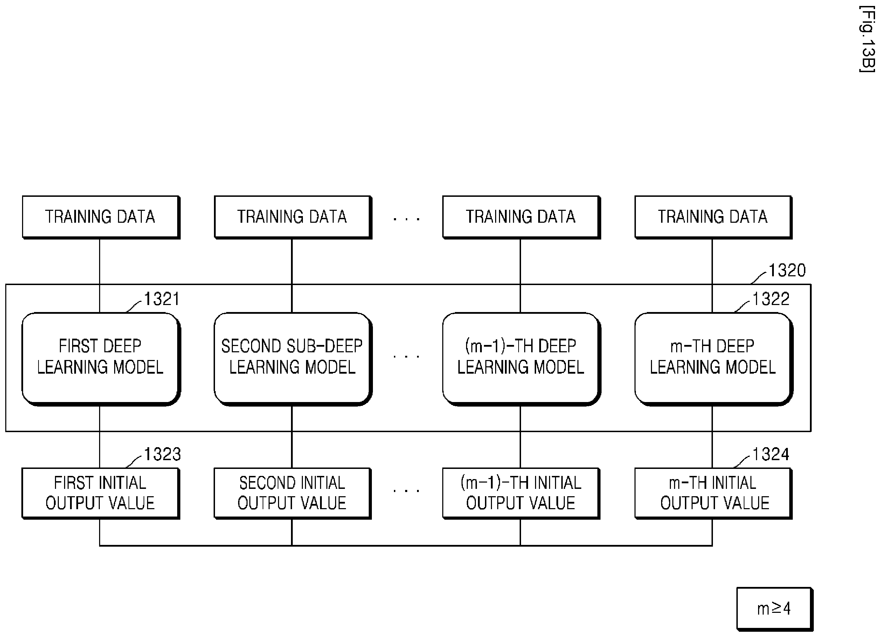

FIG. 13B is a configuration diagram illustrating an example of a BOG generation amount prediction model for a ship, according to an embodiment.

Referring to FIG. 13B, a BOG generation amount prediction model 1320 for the ship 1010 may include a first deep learning model 1321 to an m-th deep learning model 1322. Here, m is a natural number greater than or equal to 4. For example, at least one of the first deep learning model 1321 to the m-th deep learning model 1322 may be the stacking model 1310.

Because the BOG generation amount prediction model for a ship includes a plurality of deep learning models, the prediction accuracy for a BOG generation amount of the ship may be improved.

For example, diversity may be ensured because a prediction result from each of the plurality of deep learning models is used. Thus, by using diverse prediction results, the generalization performance of the BOG generation amount prediction model for a ship, which includes a plurality of deep learning models, may be improved.

Here, generalization refers to the capability of a deep learning model to perform accurate predictions even on new data other than training data. In other words, it means maintaining accuracy on new data without suffering from overfitting or underfitting. Here, overfitting means that the deep learning model exhibits high accuracy only on the training data but low accuracy on other data, and underfitting means that the deep learning model fails to learn the training data sufficiently, resulting in low accuracy on both the training data and other data.

Furthermore, the prediction results are mutually independent, and thus, even when one prediction value has low accuracy, the overall accuracy may be enhanced by using a plurality of other prediction values that have high accuracy.

For example, the processor 110 may calculate ground-truth data for training, train the BOG generation amount prediction model by using input data and the calculated ground-truth data, and validate the BOG generation amount prediction model by using another portion of the pre-stored navigation data.

For example, the processor 110 may calculate the ground-truth data by using at least one of a gas consumption amount, a gas temperature change value, and an insulation material temperature change value.

First, the processor 110 calculates ground-truth data and trains the BOG generation amount prediction model by using the calculated ground-truth data and the input data. For example, the processor 110 may calculate ground-truth data for supervised learning. By performing supervised learning on the BOG generation amount prediction model by using the ground-truth data, the processor 110 may improve the accuracy of the model.

Here, supervised learning refers to a method for machine learning in which a model is trained by using training data to output data close to ground-truth data. In addition, the performance of the model trained via supervised learning is evaluated by using test data.

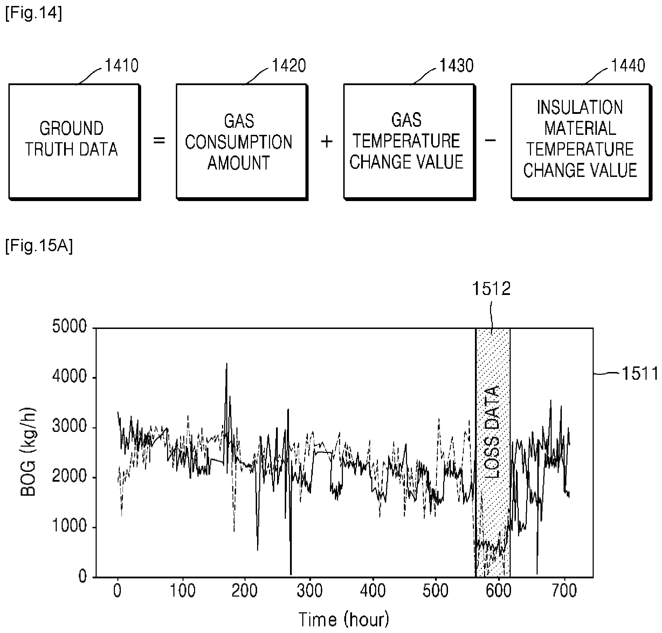

Hereinafter, an example in which the processor 110 calculates ground-truth data will be described with reference to FIG. 14.

FIG. 14 is a diagram for describing an example of calculating ground-truth data for training, according to an embodiment.

Referring to FIG. 14, the processor 110 may calculate ground-truth data by using a gas consumption amount 1420, a gas temperature change value 1430, and an insulation material temperature change value 1440. For example, the processor 110 may calculate, as ground-truth data 1410, a difference between the insulation material temperature change value 1440 and the sum of the gas consumption amount 1420 and the gas temperature change value 1430. As another example, the processor 110 may calculate ground-truth data by using the gas consumption amount 1420, the gas temperature change value 1430, the insulation material temperature change value 1440, and a gas discharge amount.

Here, because a gas temperature inside a tank is affected by a temperature outside the tank, the gas temperature change value 1430 may be a value that considers both the gas temperature inside the tank and the temperature outside the tank.

In addition, the processor 110 may validate the BOG generation amount prediction model by using another portion of the pre-stored navigation data. For example, the pre-stored navigation data may be split into training data for the input data selection model and test data for the BOG generation amount prediction model for a ship. In addition, by validating the BOG generation amount prediction model for a ship, the performance of the model may be evaluated, and further training may be performed.

Hereinafter, an example in which the processor 110 splits pre-stored navigation data into training data and test data will be described with reference to FIGS. 15A to 15B.

FIG. 15A is a diagram for describing the processor 110 removing loss data from data stored in the memory 120, according to an embodiment.

Referring to FIG. 15A, the processor 110 removes loss data 1512 from pre-stored navigation data 1511 in the memory 120. The loss data 1512 refers to portions within the pre-stored navigation data 1511 where data was not stored due to measurement errors. Because the loss data 1512 may affect the accuracy of the model, the processor 110 may remove the loss data 1512.

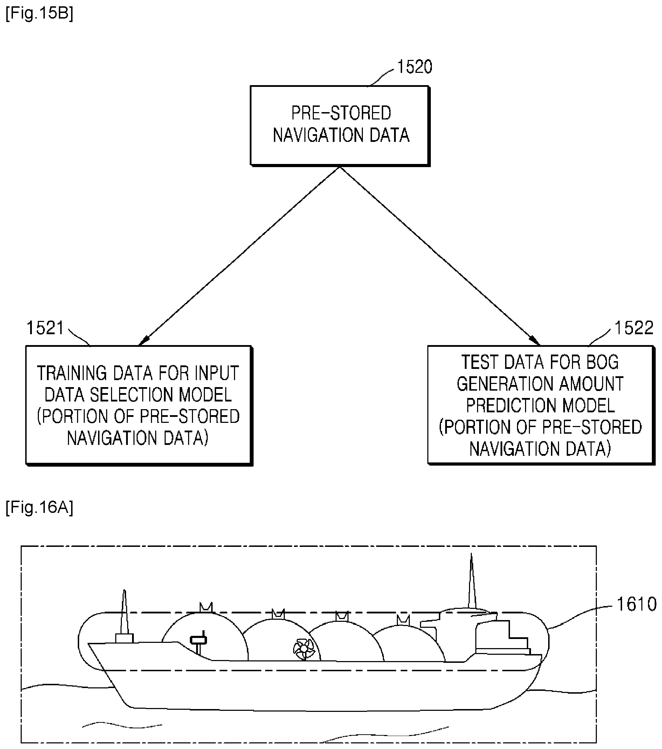

FIG. 15B is a diagram for describing an example of separating a portion of pre-stored navigation data as training data for an input data selection model, and another portion as test data for a BOG generation amount prediction model for a ship, according to an embodiment.

In addition, the processor 110 splits pre-stored navigation data 1520 from which the loss data 1512 has been removed, into training data 1521 for the input data selection model and test data 1522 for the BOG generation amount prediction model for a ship.

Here, splitting the pre-stored navigation data 1520 into the training data 1521 and the test data 1522 is intended to prevent the model from being insufficiently trained or from being overfitted. Here, overfitting means that the model learns training data too well, exhibiting high accuracy on the training data but significantly low accuracy on other input data.

Referring again to FIG. 11, in operation 1130, the processor 110 may predict a BOG generation amount via the trained BOG generation amount prediction model by using the current navigation data of the ship.

First, the processor 110 obtains current navigation data of the ship. For example, the current navigation data of the ship may include a gas consumption amount of a main engine, a gas consumption amount of a generator engine, a gas consumption amount of a GCU, a gas consumption amount of a reliquefaction unit, a temperature inside a tank, a pressure inside the tank, a cargo loading amount (e.g., a liquefied gas level within a tank), a sea temperature, an air temperature, an air pressure, a wave height, a gas consumption amount of the ship, and the like. However, this is merely an example, and the current navigation data of the ship is not limited thereto. In addition, the communication module 140 may obtain data regarding an air temperature, an air pressure, a wave height, and the like, from a weather information center.

Hereinafter, an example in which the processor 110 obtains current navigation data of the ship will be described with reference to FIGS. 16A to 16B.

FIG. 16A is a diagram for describing an example of obtaining current navigation data of a ship from an external environment around the ship, according to an embodiment.

Referring to FIG. 16A, the processor 110 may obtain current navigation data of the ship from an external environment 1610 around the ship. For example, the processor 110 may obtain data regarding a sea temperature, a wave height, and the like, from the external environment 1610 around the ship.

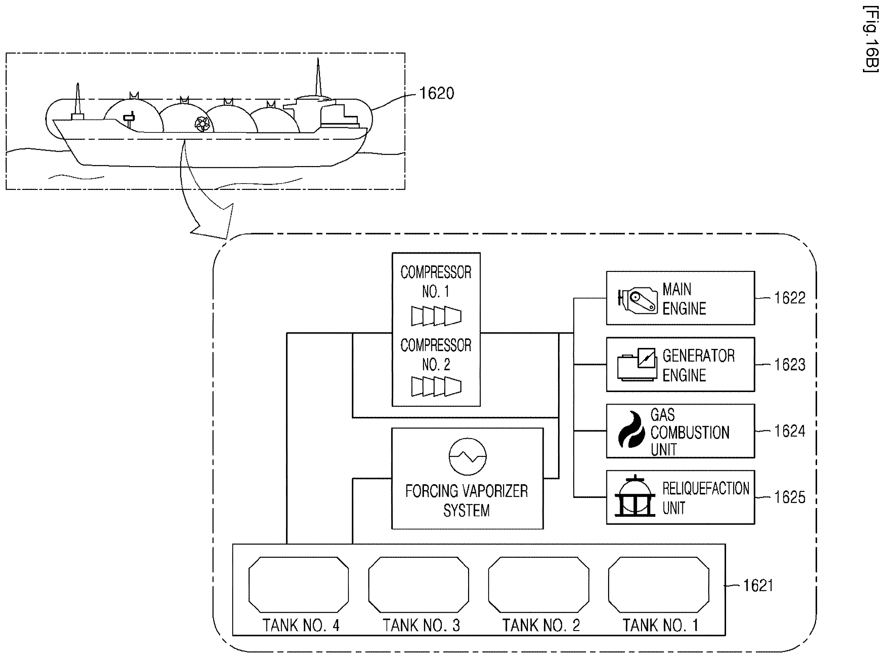

FIG. 16B is a diagram illustrating an example of obtaining current navigation data of a ship from an interior of the ship, according to an embodiment.

Referring to FIG. 16B, the processor 110 may obtain current navigation data of the ship from an interior 1620 of the ship. In detail, data may be obtained from tanks 1621 located within the interior 1620 of the ship, such as temperatures inside the tanks, pressures inside the tanks, a cargo loading amount, and the like. In addition, data may be obtained from a main engine 1622, a generator engine 1623, a GCU 1624, and a reliquefaction unit 1625, such as a gas consumption amount of the main engine, a gas consumption amount of the generator engine, a gas consumption amount of the GCU, a gas consumption amount of the reliquefaction unit 1625, and the like. However, this is merely an example, and the locations from which the current navigation data of the ship described above are not limited thereto.

For example, the processor 110 may output initial BOG generation amount prediction values from the plurality of deep learning models, respectively, and calculate a final BOG generation amount prediction value by applying different weights to the initial BOG generation amount prediction values, respectively.

For example, the processor 110 may apply the highest weight to the initial BOG generation amount prediction value that is output from the stacking model, among the initial BOG generation amount prediction values.

First, the processor 110 may output initial BOG generation amount prediction values from the plurality of deep learning models, respectively. For example, the processor 110 may output a first initial output value to an m-th initial output value, as respective output values from the first deep learning model to the m-th deep learning model included in the BOG generation amount prediction model for a ship. In addition, the m-th deep learning model may be a stacking model.

In addition, the processor 110 may calculate a final BOG generation amount prediction value by applying different weights to the initial BOG generation amount prediction values, respectively. In addition, the processor 110 may apply the highest weight to the initial BOG generation amount prediction value that is output from the stacking model.

Here, a weight represents the importance assigned to each piece of data, and applying weights to different pieces of data may improve the learning accuracy of the model. Thus, a higher weight may be applied to data with a higher importance.

For example, the processor 110 may calculate a final BOG generation amount prediction value by applying the same weight to the initial BOG generation amount prediction values. As another example, the processor 110 may calculate a final BOG generation amount prediction value by applying different weights to the initial BOG generation amount prediction values, respectively. As yet another example, the processor 110 may apply the highest weight to the initial BOG generation amount prediction value that is output from the stacking model, among the initial BOG generation amount prediction values. The stacking model includes sub-deep learning models and thus may be considered highly important, and therefore, a high weight may be applied to the initial BOG generation amount prediction model output from the stacking model.

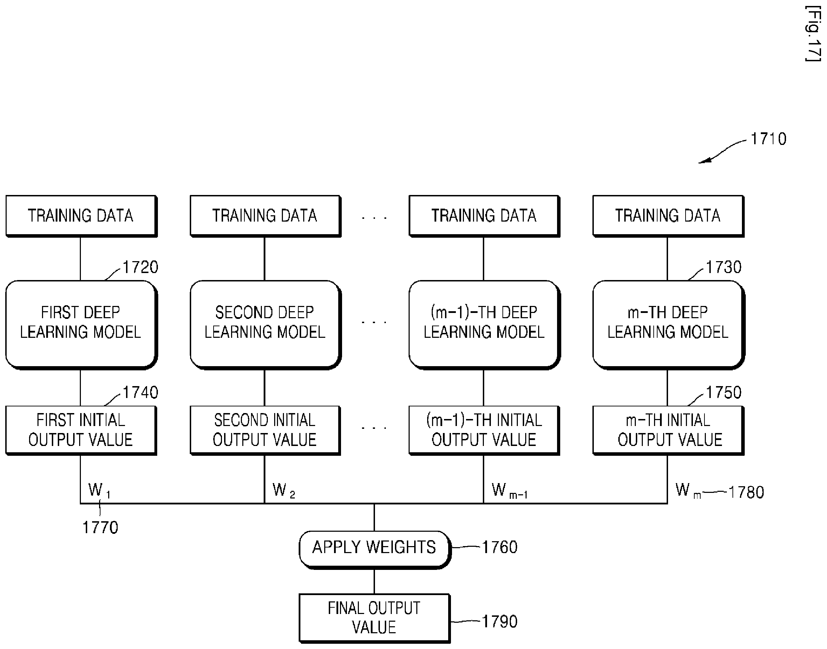

Hereinafter, an example of predicting a BOG generation amount via a BOG generation amount prediction model for a ship will be described with reference to FIG. 17.

FIG. 17 is a diagram for describing an example of calculating a final BOG generation amount prediction value by applying weights to initial BOG generation amount prediction values, according to an embodiment.

Referring to FIG. 17, the processor 110 may output initial output values from a first deep learning model 1720 to an m-th deep learning model 1730, which are included in a BOG generation amount prediction model 1710 for a ship. Here, the m-th deep learning model 1730 may be a stacking model. In addition, an m-th initial output value 1750 may be an initial output value that is output from the stacking model.

Among the initial output values from the first deep learning model 1720 to the m-th deep learning model 1730, which are included in the BOG generation amount prediction model 1710 for a ship, the accuracy of the stacking model, i.e., the m-th deep learning model 1730, may be the highest.

A weight *W*₁ 1770 to a weight *Wₘ* 1780 may be applied to a first initial output value 1740 to the m-th initial output value 1750, respectively. The weight *W*₁ 1770 to the weight *Wₘ* 1780 may have the same value. In addition, the weight *W*₁ 1770 to the weight *Wₘ* 1780 may have different values. Among the weight *W*₁ 1770 to the weight *Wₘ* 1780, the weight *Wₘ* 1780 corresponding to the m-th initial output value from the stacking model may be the highest.

Thus, from the BOG generation amount prediction model for a ship, the processor 110 may obtain a final output value 1790 that is close to an actual BOG generation amount, i.e., a BOG generation amount prediction value.

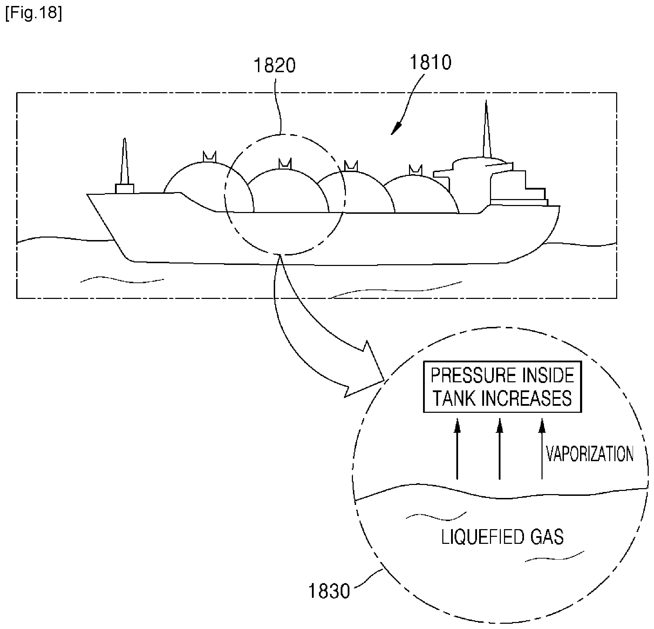

FIG. 18 is a diagram for describing an example of a method of predicting a tank pressure of a ship, according to an embodiment.

Referring to FIG. 18, an example of a ship 1810 including at least one tank 1820 is illustrated. During navigation of the ship 1810, BOG may be generated within the tank 1820, and as a result, the pressure inside the tank 1820 may increase (1830).

As such, generation of BOG causes the volume of liquefied gas stored in the tank 1820 to increase, which consequently increases the pressure inside the tank 1820. When the pressure inside the tank 1820 increases, the safety of the tank 1820 is reduced, creating a risk that the tank 1820 may explode. To prevent this risk, BOG is released, but this process may cause environmental pollution.

In the related art, accurately predicting the pressure of the tank 1820 has been challenging, as it constantly changes depending on weather conditions along a navigation route, a temperature, sloshing, and the like.

According to a method of predicting a tank pressure of a ship according to an embodiment, a plurality of deep learning models are trained by using pre-stored actual navigation data. Then, one of a plurality of navigation modes is selected according to the liquefied gas level within the tank, and the pressure of the tank 1820 in the ship 1810 is predicted by using the deep learning model corresponding to the selected navigation mode.

Therefore, by predicting the real-time pressure inside the tank 1820, it may be possible to proactively respond to future conditions. Furthermore, according to the solutions provided by the present disclosure, the amount of use of equipment necessary for navigation of the ship 1810 may be efficiently controlled.

Hereinafter, a method and device for predicting a tank pressure of a ship, according to an embodiment of the present disclosure, will be described in detail with reference to FIG. 2 and FIGS. 19 to 24.

Referring to FIG. 2, the communication module 140 may receive, from an external server or an external device, information about existing navigation data, information about current navigation data, recommended navigation information, weather information, and the like. In addition, the memory 120 may store various pieces of data, such as existing navigation data, current navigation data, recommended navigation information, weather information, or data generated according to an operation of the processor 110.

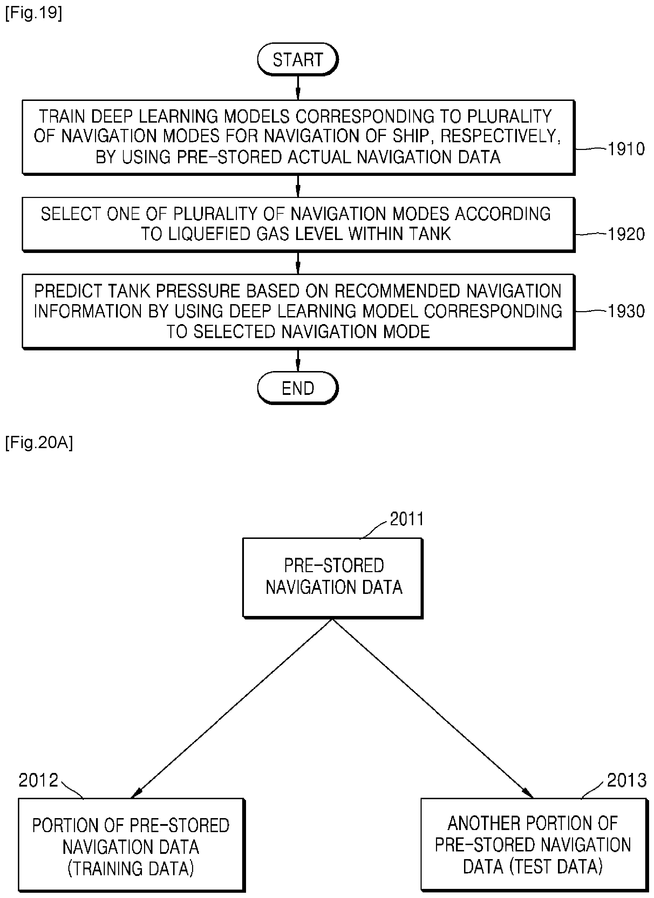

The processor 110 may control the operation of the device 100 by executing programs stored in the memory 120. For example, the processor 110 may perform at least some operations of the method of predicting a tank pressure of a ship, which will be described with reference to FIGS. 19 to 24.

In other words, the processor 110 may train deep learning models corresponding to a plurality of navigation modes for navigation of the ship, respectively, by using pre-stored actual navigation data, select one of a plurality of navigation modes according to a liquefied gas level within a tank, and predict a pressure of the tank based on recommended navigation information by using the deep learning model corresponding to the selected navigation mode.

First, the processor 110 may train deep learning models corresponding to a plurality of navigation modes for navigation of the ship, respectively, by using pre-stored actual navigation data.

For example, the processor 110 may obtain ground-truth data for training, train the deep learning models corresponding to the plurality of navigation modes, respectively, by using a portion of the pre-stored actual navigation data and the ground-truth data, and validate the trained deep learning models by using another portion of the pre-stored actual navigation data.

Here, the training may be performed by using errors between the ground-truth data and output data from the deep learning model, and a backpropagation algorithm.

In addition, the processor 110 may select one of the plurality of navigation modes according to the liquefied gas level within the tank.

For example, the processor 110 may measure the liquefied gas level within the tank, select a first mode from among the plurality of navigation modes when the level is greater than or equal to a predetermined height, and select a second mode from among the plurality of navigation modes when the level is less than the predetermined height.

The processor 110 may predict a pressure of the tank based on the recommended navigation information by using the deep learning model corresponding to the selected navigation mode.

For example, the processor 110 may obtain recommended navigation information for the ship, obtain a plurality of intermediate values by using the recommended navigation information as input data, and obtain a tank pressure prediction value by applying weights to the plurality of intermediate values.

FIG. 19 is a flowchart for describing an example of a method of predicting a tank pressure of a ship, according to an embodiment.

Referring to FIG. 19, the method of predicting a tank pressure of a ship may include operations 1910 to 1930. However, the present disclosure is not limited thereto, and other general-purpose operations, in addition to those illustrated in FIG. 19, may be further included in the method of predicting a tank pressure of a ship. In addition, as described above with reference to FIGS. 2 and 18, at least one of the operations of the flowchart illustrated in FIG. 19 may be processed by the processor 110.

In operation 1910, the processor 110 may train deep learning models corresponding to a plurality of navigation modes for navigation of the ship, respectively, by using pre-stored actual navigation data.

For example, the processor 110 may obtain ground-truth data for training, train the deep learning models corresponding to the plurality of navigation modes, respectively, by using a portion of the pre-stored actual navigation data and the ground-truth data, and validate the trained deep learning models by using another portion of the pre-stored actual navigation data.

Here, the ground-truth data refers to data necessary for training a deep learning model via supervised learning, and represents a target that the deep learning model aims to predict. The ground-truth data is used during a process of training the deep learning model, to measure the performance of the deep learning model and evaluate a prediction result by the deep learning model.

In addition, supervised learning is a machine learning method that aims to learn the relationship between input data and ground-truth data, such that when new input data is provided, the model may output a prediction result for the new input data.

First, the processor 110 obtains ground-truth data for training.

For example, the processor 110 may obtain, as ground-truth data, an actual tank pressure value under navigation conditions similar to the current navigation, from the pre-stored actual navigation data. In addition, the navigation conditions may include weather information, a traveling speed for each section, a total average speed, amounts of liquefied gas in the tank 1820 upon port entry and departure, and the like.

For example, the pre-stored actual navigation data may include the latitude and longitude of the ship 1810, a liquefied gas discharge amount, a speed, a wave height, a wave period, a wave direction, a swell height, a swell period, a swell direction, a wind speed, an air temperature, an air pressure, and a sea temperature.

For example, the actual tank pressure value may be a tank pressure value for each navigation section. As another example, the actual tank pressure value may be an average tank pressure value during a voyage.

For example, the processor 110 trains the deep learning models corresponding to the plurality of navigation modes, respectively, by using a portion of the pre-stored actual navigation data and the ground-truth data.

Thus, the deep learning models corresponding to the plurality of navigation modes, respectively, may be trained to predict a pressure of the tank 1820 based on recommended navigation information.

For example, the processor 110 may split the pre-stored actual navigation data to use it as training data and test data.

Hereinafter, with reference to FIG. 20A, an example will be described in which the processor 110 separates a portion of pre-stored actual navigation data as training data and another portion as test data.

FIG. 20A is a diagram for describing an example of separating a portion of pre-stored actual navigation data as training data and another portion as test data, according to an embodiment.

Referring to FIG. 20A, the processor 110 splits pre-stored actual navigation data 2011 into a portion 2012 of the pre-stored actual navigation data, and another portion 2013 of the pre-stored actual navigation data. The portion 2012 of the pre-stored actual navigation data is used as training data for the deep learning models, and the other portion 2013 is used as test data for the deep learning models.

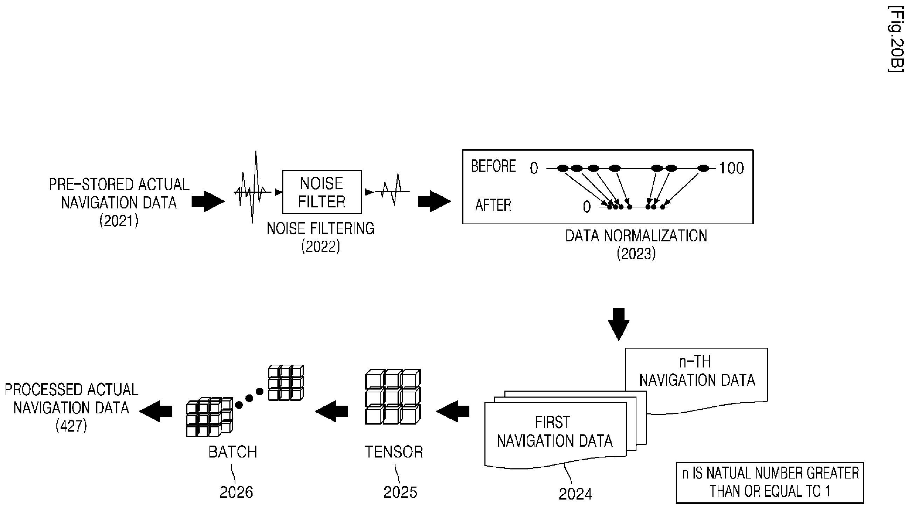

Hereinafter, an example of a process in which the processor 110 processes the pre-stored actual navigation data 2011 will be described in detail with reference to FIG. 20B.

FIG. 20B is a diagram for describing an example of a process of processing pre-stored actual navigation data, according to an embodiment.

Referring to FIG. 20B, the processor 110 filters out noise from pre-stored actual navigation data 2021 by using a noise filter. Here, the noise filter may refer to a Savitzky-Golay filter. However, examples of noise filters used by the processor 110 are not limited to the Savitzky-Golay filter described above.

The processor 110 normalizes data obtained by filtering out the noise (2023). Here, the data normalization (2023) refers to one type of preprocessing technique used when training a deep learning model, which improves the learning speed and model performance of the deep learning model by adjusting the scale of input data.

For example, the data normalization (2023) may use a Min-Max normalization technique. The Min-Max normalization technique converts input data values to a range between 0 and 1. As another example, the data normalization (2023) may use a standardization technique. The standardization technique transforms input data values to follow a distribution with a mean of 0 and a variance of 1. However, examples of normalization techniques used by the processor 110 are not limited to the Min-Max normalization technique or the standardization technique described above.

The processor 110 divides the normalized data (2023) according to an order of voyage. Here, the order of voyage refers to the order of navigation instances.

In addition, the processor 110 converts resulting data 2024 for each voyage into the form of a tensor 2025. Here, the tensor 2025 is a mathematical concept representing a multidimensional array, and while a vector represents a one-dimensional array and a matrix represents a two-dimensional array, the tensor 2025 represents an array with three or more dimensions. Thus, the deep learning model may represent input data and parameters of the deep learning model by using the tensor 2025.

The processor 110 may configure a single batch 2026 including 10 tensors 2025. Here, the batch 2026 refers to a set of input data that the deep learning model may process at one time. In general, a single batch 2026 includes multiple pieces of input data that have the same size. By using the batch 2026, the generalization performance of the deep learning model may be improved, and efficient computation is enabled. Thus, by configuring the batch 2026, the processor 110 may improve the efficiency of training when repeatedly training the deep learning model.

By using processed actual navigation data 2027, the processor 110 may improve the training efficiency of the deep learning model and increase the prediction accuracy of the deep learning model.

In addition, the processor 110 may train the deep learning model by using errors between ground-truth data and output data from the deep learning model, and a backpropagation algorithm.

Here, the backpropagation algorithm refers to an algorithm used in the field of supervised learning for training deep learning models. The backpropagation algorithm calculates errors between output data and ground-truth data, and calculates weights and biases by using the calculated errors. In addition, the backpropagation algorithm is an algorithm that updates the calculated weights and biases to minimize errors between the output data and the ground-truth data.

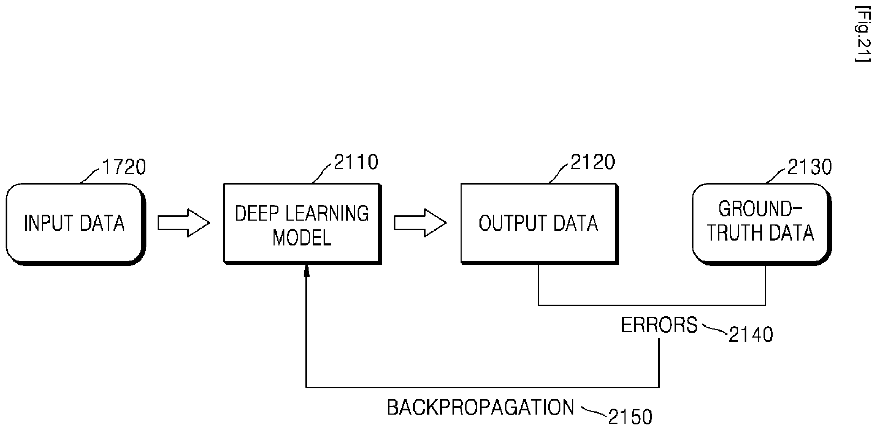

Hereinafter, with reference to FIG. 21, an example will be described in which the processor 110 trains a deep learning model by using a backpropagation algorithm.

FIG. 21 is a diagram for describing an example of a process of training a deep learning model for predicting a tank pressure of a ship, according to an embodiment.

Referring to FIG. 21, the processor 110 obtains output data 2120 from a deep learning model 2110, and ground-truth data 2130. Then, by using a loss function, the processor 110 calculates errors 2140 between the output data 2120 and the ground-truth data 2130. The processor 110 trains the deep learning model 2110 by iteratively performing a process of calculating weights and biases of the errors 2140, and modifying the weights by using a backpropagation algorithm 2150.

To prevent an issue of vanishing gradients during the use of the backpropagation algorithm 2150, the processor 110 initializes the weights by using a Xavier initialization method. Here, Xavier Initialization is a method of initializing weights, which initializes weights by using a normal distribution. However, the method of initializing weights performed by the processor 110 is not limited to the Xavier Initialization method described above.

In addition, when using the backpropagation algorithm 2150, the processor 110 uses a root mean square propagation (RMSProp) technique to find optimal weight values. Here, RMSprop is an algorithm that helps train a deep learning model quickly and stably, and it enables efficient learning by providing an optimal weight for each parameter. However, the method used by the processor 110 for finding optimal weight values is not limited to the RMSprop technique described above.

The processor 110 may validate the trained deep learning model by using the other portion 2013 of the pre-stored actual navigation data 2011.

Here, validation refers to a process of evaluating the performance of a deep learning model and confirming whether the deep learning model has been generalized. In other words, it is a process for preventing overfitting or underfitting.

The operation, performed by the processor 110, of training the deep learning model as described above may be applied equally to the deep learning models corresponding to the plurality of navigation modes for navigation of the ship 1810, respectively.

Referring again to FIG. 19, in operation 1920, the processor 110 may select one of the plurality of navigation modes according to the liquefied gas level within the tank.

For example, the processor 110 may measure the liquefied gas level within the tank, select a first mode from among the plurality of navigation modes when the level is greater than or equal to a predetermined height, and select a second mode from among the plurality of navigation modes when the level is less than the predetermined height.

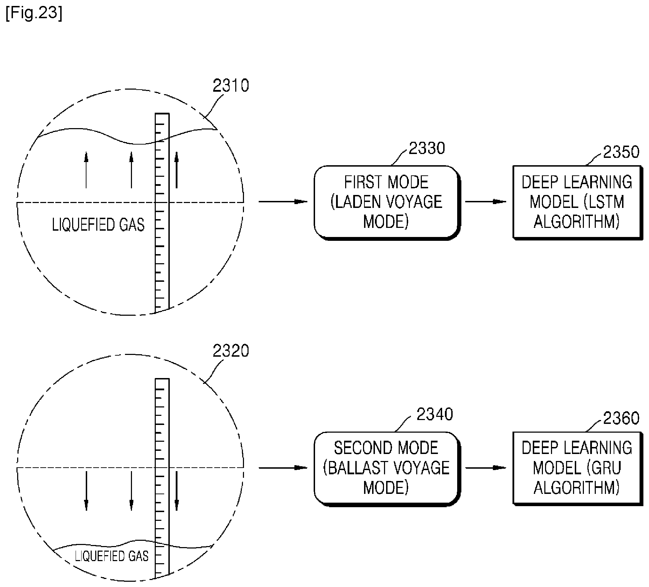

Hereinafter, with reference to FIGS. 22 and 23, an example will be described in which the processor 110 selects a first mode or a second mode from among a plurality of navigation modes according to a liquefied gas level.

FIG. 22 is a diagram for describing an example of determining a navigation mode based on whether a liquefied gas level within a tank is greater than or equal to a predetermined height, according to an embodiment.

Referring to FIG. 22, the processor 110 measures a liquefied gas level within a tank 2140 to determine whether the liquefied gas level is greater than or equal to a predetermined height (2220), or less than the predetermined level (2120). For example, the predetermined height may be half the height of the tank 2140. Thus, the processor 110 may determine the condition as a laden voyage when the liquefied gas level is greater than or equal to half the height of the tank 2140 (2220), and as a ballast voyage when the liquefied gas level is less than half the height of the tank 2140 (2120).

FIG. 23 is a diagram for describing an example of deep learning models respectively corresponding to a plurality of navigation modes according to a liquefied gas level within a tank, according to an embodiment.

Referring to FIG. 23, the processor 110 selects a first mode 2330 when the liquefied gas level is greater than or equal to half the height of the tank (2310), and selects a second mode 2340 when the liquefied gas level is less than half the height of the tank (2320). For example, the first mode 2330 may correspond to a laden voyage mode, and the second mode 2340 may correspond to a ballast voyage mode. In addition, a deep learning model 2350 for the first mode 2330 may use a long short-term memory (LSTM) algorithm, and a deep learning model 2360 for the second mode 2340 may use a gated recurrent unit (GRU) algorithm. However, the algorithms used by the deep learning models 2350 and 2360 are not limited to the LSTM algorithm and the GRU algorithm described above.

Referring again to FIG. 19, in operation 1930, the processor 110 may predict a tank pressure based on the recommended navigation information by using the deep learning model corresponding to the selected navigation mode.

For example, the processor 110 may obtain recommended navigation information for the ship, obtain a plurality of intermediate values by using the recommended navigation information as input data, and obtain a tank pressure prediction value by applying weights to the plurality of intermediate values.

First, the processor 110 obtains recommended navigation information for the ship. The processor 110 may obtain recommended navigation information via the method described above with reference to FIGS. 4 to 5.

The processor 110 may obtain a plurality of intermediate values by using the recommended navigation information as input data, and obtain a tank pressure prediction value by applying weights to the plurality of intermediate values.

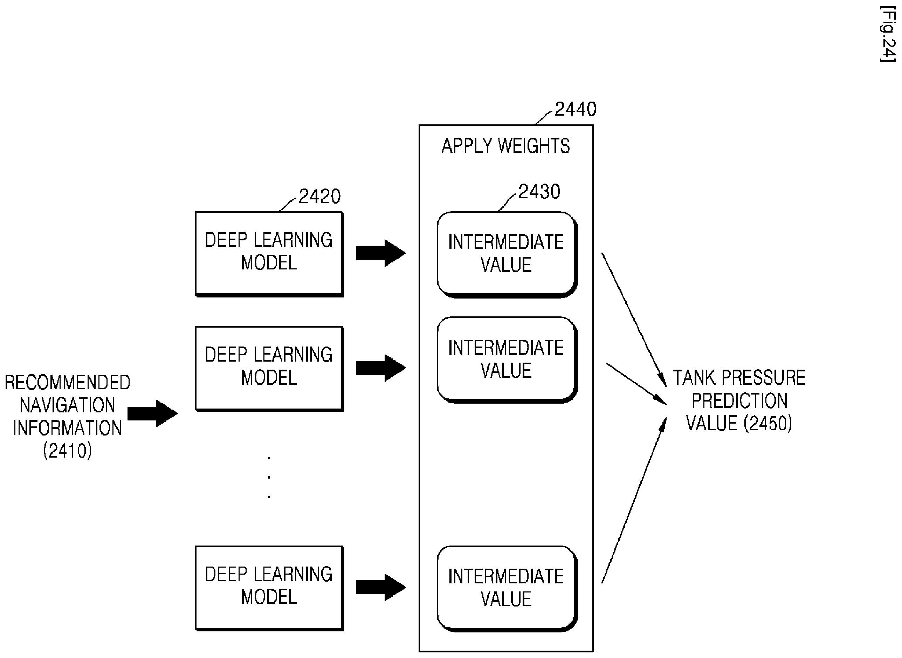

Hereinafter, with reference to FIG. 24, an example will be described in which the processor 110 obtains a tank pressure prediction value by applying weights to a plurality of intermediate values.

FIG. 24 is a diagram for describing an example of obtaining a tank pressure prediction value by applying weights to a plurality of intermediate values, according to an embodiment.

Referring to FIG. 24, the processor 110 may obtain intermediate values 2430 by using recommended navigation information 2410 as input data for deep learning models 2420. For example, for the first mode, i.e., for the laden voyage mode, the deep learning models 2420 may use an LSTM algorithm. As another example, for the second mode, i.e., for the ballast voyage mode, the deep learning models 2420 may use a GRU algorithm. However, the algorithm used by the deep learning models 2420 is not limited to the LSTM algorithm and the GRU algorithm described above.

In addition, the processor 110 may obtain a tank pressure prediction value 2450 by applying weights to the intermediate values 2430 (2440). For example, the processor 110 may obtain the tank pressure prediction value 2450 by applying weights to the intermediate values 2430 by using a linear layer (2440). However, the method used by the processor 110 for applying weights to the intermediate values 2430 (2440) is not limited to the method using a linear layer.

Thus, the processor 110 may predict a tank pressure value of the ship 1810 by using different deep learning models depending on the liquefied gas level within the tank 1820. In other words, by using different deep learning model for the respective navigation modes to predict a tank pressure of a ship, the processor 110 may improve the accuracy of tank pressure prediction.

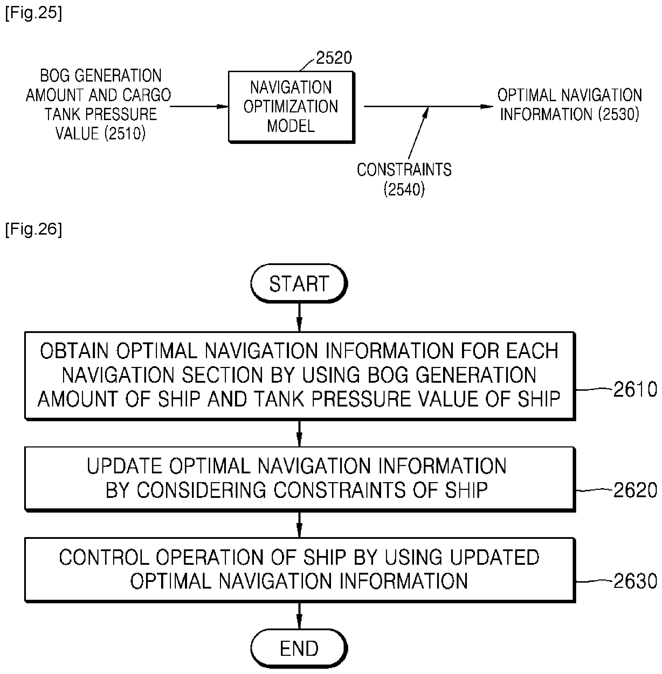

FIG. 25 is a diagram for describing an example of a method of optimizing navigation of a ship, according to an embodiment.

Referring to FIG. 25, a navigation optimization model 2520 may obtain optimal navigation information 2530 that considers constraints 2540 of the ship, by using a BOG generation amount and tank pressure value 2510. Here, the navigation optimization model 2520 is a model used for implementing the method of optimizing navigation of a ship, according to an embodiment, and may be a model that implements the method of optimizing navigation of a ship described above with reference to FIGS. 1 to 9. Thus, the following description will focus primarily on the differences from the model that implements the method of optimizing navigation of a ship described above with reference to FIGS. 1 to 9.

According to the method of optimizing navigation of a ship according to an embodiment, a BOG generation amount of the ship and a tank pressure of the ship are predicted by using recommended navigation information for the ship. Then, by using the predicted BOG generation amount and tank pressure value, optimal navigation information for each navigation section that satisfies constraints of the ship is obtained, and the operation of the ship is controlled by using the obtained optimal navigation information for each navigation section. Here, details of the constraints will be described below.

Thus, according to the method of optimizing navigation of a ship according to an embodiment, economical navigation that minimizes the gas consumption amount of the ship may be achieved by using optimal navigation information for each navigation section.

Hereinafter, a method and device for optimizing navigation of a ship, according to an embodiment of the present disclosure, will be described in detail with reference to FIG. 2 and FIGS. 26 to 28B. Here, the device may refer to the user terminal 100.

Referring to FIG. 2, the communication module 140 may receive, from an external server or an external device, information about existing navigation data, information about current navigation data, recommended navigation information, navigation plans, weather information, and the like. In addition, the memory 120 may store various pieces of data, such as existing navigation data, current navigation data, recommended navigation information, navigation plans, weather information, or data generated according to an operation of the processor 110.

The processor 110 may control the operation of the device 100 by executing programs stored in the memory 120. For example, the processor 110 may perform at least some operations of the method of optimizing navigation of a ship, which will be described below with reference to FIGS. 26 to 28B.

In other words, the processor 110 may obtain optimal navigation information for each navigation section by using a BOG generation amount of the ship and a tank pressure value of the ship, update the optimal navigation information by considering constraints of the ship, and control the operation of the ship by using the updated optimal navigation information.

The processor 110 may obtain optimal navigation information for each navigation section by using the BOG generation amount of the ship and the tank pressure value of the ship. In addition, the processor 110 may update the optimal navigation information by considering the constraints of the ship. Here, the constraints may be set based on at least one of relationships between a mass, energy, a power amount, maximum/minimum liquefied gas consumption amounts of equipment, the efficiency of equipment, the efficiency of the main engine, the efficiency of the generator engine, the efficiency of the shaft generator, the pressure of a tank, the maximum/minimum speeds of the ship, and the average speed of the ship.

For example, the processor 110 may obtain optimal navigation information in different manners depending on whether a speed for each navigation section, which is included in the recommended navigation information, is used for navigation of the ship.

For example, when the speed for each navigation section included in the recommended navigation information is used for navigation of the ship, the processor 110 may obtain optimal navigation information by using a BOG generation amount, a tank pressure value, and the recommended navigation information, and the recommended navigation information may include preset weather information.

In addition, the processor 110 may calculate a difference between a gas consumption amount included in (n+1)-th intermediate navigation information and a gas consumption amount included in n-th intermediate navigation information, determine whether the difference falls within a preset range, and, based on a result of the determination, confirm the (n+1)-th intermediate navigation information as optimal navigation information. Here, n is a natural number greater than or equal to 1, and the (n+1)-th intermediate navigation information may be generated based on an updated value of at least one parameter included in the n-th intermediate navigation information.

As another example, when the speed for each navigation section included in the recommended navigation information is not used for navigation of the ship, the processor 110 may obtain optimal navigation information by using a BOG generation amount, a tank pressure value, and the recommended navigation information, and the recommended navigation information may include weather information updated according to navigation of the ship.

In addition, the processor 110 may calculate a difference between a gas consumption amount included in (n+1)-th intermediate navigation information and a gas consumption amount included in n-th intermediate navigation information, determine whether the difference falls within a preset range, and, based on a result of the determination, confirm the (n+1)-th intermediate navigation information as optimal navigation information. Here, n is a natural number greater than or equal to 1, and the (n+1)-th intermediate navigation information may be generated based on an updated value of at least one parameter included in the n-th intermediate navigation information.

In addition, the processor 110 may control the operation of the ship by using the updated optimal navigation information. For example, the processor 110 may control the ship according to a preset operating mode by using the optimal navigation information, and the operating mode may include an operating mode that minimizes the gas consumption amount of the ship.

FIG. 26 is a flowchart for describing an example of a method of optimizing navigation of a ship, according to an embodiment.

Referring to FIG. 26, the method of optimizing navigation of a ship may include operations 2610 to 2630. However, the present disclosure is not limited thereto, and other general-purpose operations, in addition to those illustrated in FIG. 26, may be further included in the method of optimizing navigation of a ship. In addition, as described above with reference to FIGS. 2 and 25, at least one of the operations of the flowchart illustrated in FIG. 26 may be processed by the processor 110.

In operation 2610, the processor 110 may obtain optimal navigation information for each navigation section by using a BOG generation amount of the ship and a tank pressure value of the ship.

First, the processor 110 may predict a BOG generation amount of the ship. For example, the processor 110 may predict a BOG generation amount of the ship via the method described above with reference to FIG. 6. As another example, the processor 110 may predict a BOG generation amount of the ship by using the method and device for predicting a BOG generation amount of a ship, as described above with reference to FIG. 2 and FIGS. 10 to 17. However, the method of predicting a BOG generation amount of a ship is not limited to the methods described above.

In addition, the processor 110 may predict a tank pressure of the ship. For example, the processor 110 may predict a tank pressure of the ship via the method described above with reference to FIG. 6. As another example, the processor 110 may predict a tank pressure of the ship by using the method and device for predicting a tank pressure of a ship, as described above with reference to FIG. 2 and FIGS. 18 to 24. However, the method of predicting a tank pressure of the ship is not limited to the methods described above.

The processor 110 may obtain optimal navigation information for each navigation section by using the BOG generation amount of the ship and the tank pressure value of the ship. For example, the processor 110 may obtain optimal navigation information in different manners depending on whether a speed for each navigation section, which is included in the recommended navigation information, is used for navigation of the ship.

Here, the recommended navigation information may be information intended to assist a navigator in navigating the ship efficiently from a departure point to a destination, and the processor 110 may generate the recommended navigation information via the method described above with reference to FIGS. 4 to 5. The recommended navigation information may include the recommended navigation information described above with reference to FIGS. 4 to 5, and may additionally include a speed for each navigation section, a total average speed of the ship, the latitude and longitude of the ship over time, and weather information over time. However, the method of generating the recommended navigation information is not limited to the method described above, and the recommended navigation information is not limited to the recommended navigation information described above.

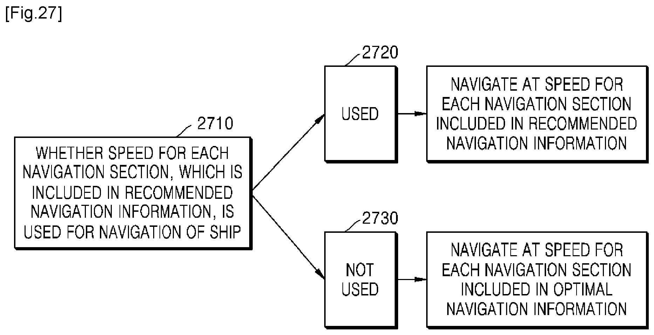

Hereinafter, with reference to FIG. 27, an example will be described in which different approaches are distinguished based on whether the processor 110 uses a speed for each navigation section, which is included in recommended navigation information, for navigation of the ship.

FIG. 27 is a diagram for describing an example of obtaining optimal navigation information in different manners depending on whether a speed for each navigation section, which is included in recommended navigation information, is used for navigation of a ship, according to an embodiment.

Referring to FIG. 27, the processor 110 may obtain optimal navigation information in different manners depending on whether a speed for each navigation section, which is included in recommended navigation information, is used for navigation of the ship (2710).

For example, when the speed for each navigation section included in the recommended navigation information is used for navigation of the ship (2720), the processor 110 causes the ship to navigate at the speed for each navigation section included in the recommended navigation information. Here, the speed for each navigation section included in the recommended navigation information may be the same across all navigation sections. In addition, the speed for each navigation section included in the recommended navigation information may be different across all navigation sections. In addition, the speed for each navigation section included in the recommended navigation information may be the same for only some navigation sections.

As another example, when the speed for each navigation section included in the recommended navigation information is not used for navigation of the ship (2730), the processor 110 causes the ship to navigate at a speed for each navigation section included in the optimal navigation information. Here, the speed for each navigation section included in the optimal navigation information may be the same across all navigation sections. In addition, the speed for each navigation section included in the optimal navigation information may be different across all navigation sections. In addition, the speed for each navigation section included in the optimal navigation information may be the same for only some navigation sections. However, even when the processor 110 does not use the speed for each navigation section included in the recommended navigation information (2730), a total average speed included in the recommended navigation information may be used.

Hereinafter, a process in which the processor 110 obtains optimal navigation information will be described in detail, for a case in which a speed for each navigation section included in recommended navigation information is used for navigation of the ship, and a case in which it is not used.

For example, when the speed for each navigation section included in the recommended navigation information is used for navigation of the ship, the processor 110 may obtain optimal navigation information by using a BOG generation amount, a tank pressure value, and recommended navigation information, and the recommended navigation information may include preset weather information.

In addition, the processor 110 may calculate a difference between a gas consumption amount included in (n+1)-th intermediate navigation information and a gas consumption amount included in n-th intermediate navigation information, determine whether the difference falls within a preset range, and, based on a result of the determination, confirm the (n+1)-th intermediate navigation information as optimal navigation information. Here, (n+2)-th intermediate navigation information may be generated based on an updated value of at least one parameter included in the (n+1)-th intermediate navigation information. Here, n is a natural number greater than or equal to 1.

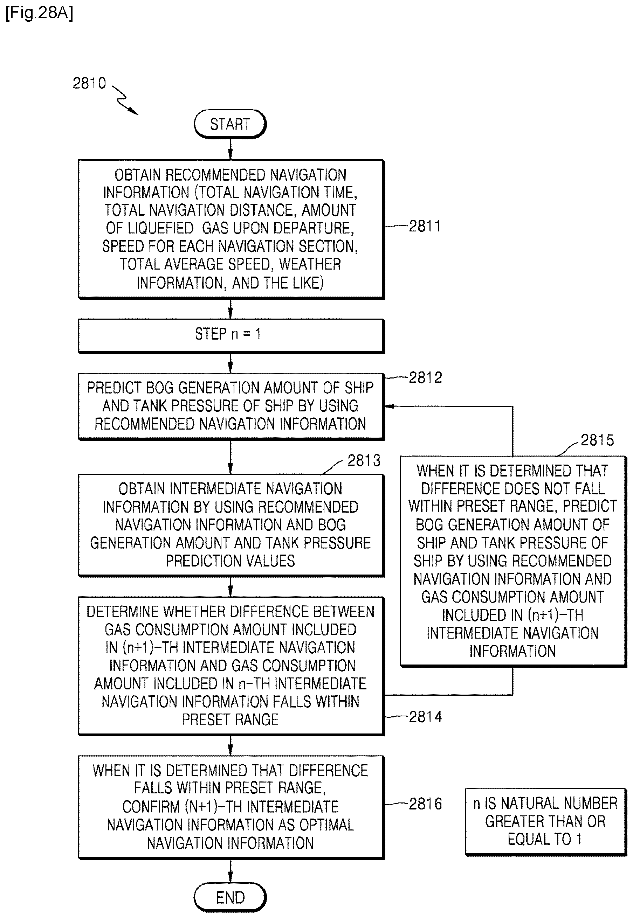

Hereinafter, with reference to FIG. 28A, an example will be described in which the processor 110 obtains optimal navigation information in a case in which a speed for each navigation section, which is included in recommended navigation information, is used for navigation of the ship.

FIG. 28A is a flowchart for describing an example of obtaining optimal navigation information in a case in which a speed for each navigation section, which is included in recommended navigation information, is used for navigation of a ship, according to an embodiment.

Referring to FIG. 28A, in a case in which a speed for each navigation section, which is included in recommended navigation information, is used for navigation of the ship (2810), the processor 110 may obtain optimal navigation information by using the recommended navigation information, a BOG generation amount prediction value for the ship, and a tank pressure prediction value for the ship.

First, in operation 2811, the processor 110 obtains recommended navigation information.

Here, the recommended navigation information may include the recommended navigation information as described above. In operation 2812, the processor 110 may predict a BOG generation amount of the ship and a tank pressure of the ship via the methods described above. Here, the BOG generation amount may vary depending on weather conditions such as a wind speed, a wave height, or a swell height. Thus, the BOG generation amount prediction value and the tank pressure prediction value may also vary depending on the weather conditions.

In operation 2813, the processor 110 obtains intermediate navigation information by using the recommended navigation information, the BOG generation amount prediction value for the ship, and the tank pressure prediction value for the ship. Here, the intermediate navigation information may include an optimal speed of the ship for each navigation section, a gas consumption amount of the ship, and an amount of use of equipment installed on the ship. Here, the equipment may include a subcooler, a shaft generator, a main engine, a generator engine, a GCU, a reliquefaction unit, and the like that are installed on the ship. In addition, the gas consumption amount may be calculated by using a gas consumption amount of the main engine, a gas consumption amount of the generator engine, a gas consumption amount of the GCU, and a gas consumption amount of the reliquefaction unit.

In operation 2814, the processor 110 calculates a difference between a gas consumption amount included in (n+1)-th intermediate navigation information and a gas consumption amount included in n-th intermediate navigation information. In addition, the processor 110 may determine whether the difference between the (n+1)-th gas consumption amount and the n-th gas consumption amount falls within a preset range. Here, the preset range may be greater than or equal to 0 but less than 0.01.

When the difference between the (n+1)-th gas consumption amount and the n-th gas consumption amount does not fall within the preset range, the processor 110 returns to operation 2812.

In operation 2815, because the processor 110 does not use the optimal speed of the ship included in the (n+1)-th intermediate navigation information, the weather information included in the recommended navigation information remains unchanged. Thus, when obtaining the (n+2)-th intermediate navigation information, the processor 110 uses the preset weather information included in the recommended navigation information.

When the processor 110 performs operation 2812 again, the (n+2)-th intermediate navigation information may be generated based on an updated value of at least one parameter included in the (n+1)-th intermediate navigation information. For example, the at least one parameter may be a gas consumption amount.

For example, when the processor 110 performs operation 2812 again, the BOG generation amount prediction value for the ship may be changed by using the (n+1)-th gas consumption amount instead of the n-th gas consumption amount. In addition, as the BOG generation amount prediction value for the ship is changed, the intermediate navigation information may be changed.

In operation 2816, when the difference between the (n+1)-th gas consumption amount and the n-th gas consumption amount falls within the preset range, the processor 110 may confirm the (n+1)-th intermediate navigation information as optimal navigation information. Here, the optimal navigation information may include the BOG generation amount prediction value for the ship, the tank pressure prediction value for the ship, and the gas consumption amount of the ship, the optimal speed of the ship, and the amount of use of equipment installed on the ship, which are included in the (n+1)-th intermediate navigation information.

For example, when the speed for each navigation section included in the recommended navigation information is not used for navigation of the ship, the processor 110 may obtain optimal navigation information by using a BOG generation amount, a tank pressure value, and the recommended navigation information, and the recommended navigation information may include weather information updated according to navigation of the ship.

In addition, the processor 110 may calculate a difference between a gas consumption amount included in (n+1)-th intermediate navigation information and a gas consumption amount included in n-th intermediate navigation information, determine whether the difference falls within a preset range, and, based on a result of the determination, confirm the (n+1)-th intermediate navigation information as optimal navigation information. Here, (n+2)-th intermediate navigation information may be generated based on an updated value of at least one parameter included in the (n+1)-th intermediate navigation information. Here, n is a natural number greater than or equal to 1.

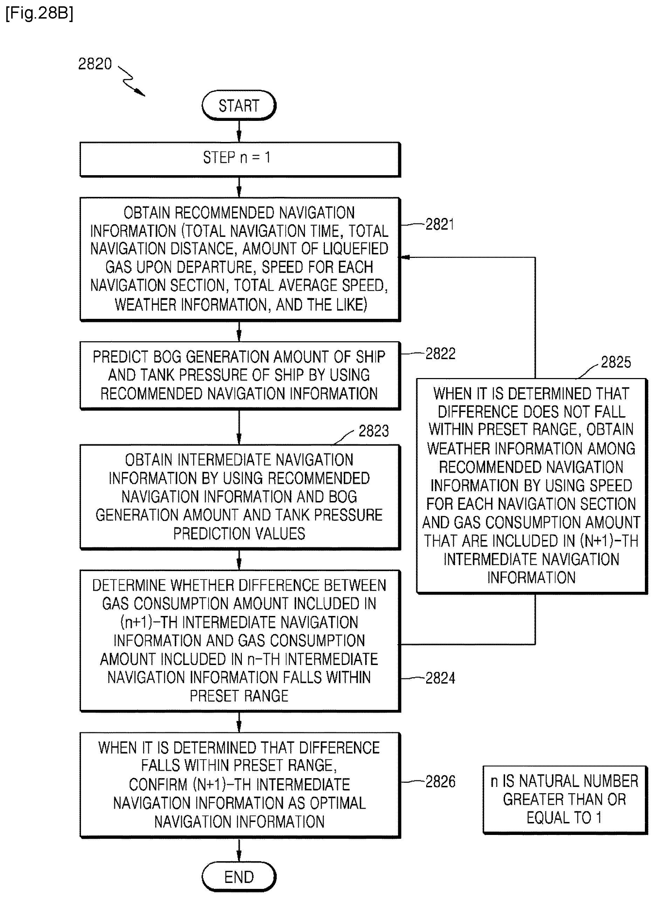

Hereinafter, with reference to FIG. 28B, an example will be described in which the processor 110 obtains optimal navigation information in a case in which a speed for each navigation section, which is included in recommended navigation information, is not used for navigation of the ship.

FIG. 28B is a flowchart for describing an example of obtaining optimal navigation information in a case in which a speed for each navigation section, which is included in recommended navigation information, is not used for navigation of a ship, according to an embodiment.

Referring to FIG. 28B, in a case in which a speed for each navigation section, which is included in recommended navigation information, is not used for navigation of the ship (2820), the processor 110 may obtain optimal navigation information by using the recommended navigation information, a BOG generation amount prediction value for the ship, and a tank pressure prediction value for the ship.

First, in operation 2821, the processor 110 obtains recommended navigation information.

Here, the recommended navigation information may include the recommended navigation information as described above, and may further include weather information updated according to navigation of the ship, and the like. In operation 2822, the processor 110 may predict a BOG generation amount of the ship and a tank pressure of the ship via the methods described above. Here, the BOG generation amount may vary depending on weather conditions such as a wind speed, a wave height, or a swell height. Thus, the BOG generation amount prediction value and the tank pressure prediction value may also vary depending on the weather conditions.

In operation 2823, the processor 110 obtains intermediate navigation information by using the recommended navigation information, the BOG generation amount prediction value for the ship, and the tank pressure prediction value for the ship. Here, the intermediate navigation information may include an optimal speed of the ship for each navigation section, a gas consumption amount of the ship, and an amount of use of equipment installed on the ship. Here, the equipment may include a subcooler, a shaft generator, a main engine, a generator engine, a GCU, a reliquefaction unit, and the like that are installed on the ship.

In operation 2824, the processor 110 calculates a difference between a gas consumption amount included in (n+1)-th intermediate navigation information and a gas consumption amount included in n-th intermediate navigation information. In addition, the processor 110 may determine whether the difference between the (n+1)-th gas consumption amount and the n-th gas consumption amount falls within a preset range. Here, the preset range may be greater than or equal to 0 but less than 0.01.

When the difference between the (n+1)-th gas consumption amount and the n-th gas consumption amount does not fall within the preset range, the processor 110 returns to operation 3021.

When the processor 110 performs operation 2821 again, the (n+2)-th intermediate navigation information may be generated based on an updated value of at least one parameter included in the (n+1)-th intermediate navigation information. For example, the at least one parameter may be a gas consumption amount. As another example, the at least one parameter may be an optimal speed for each navigation section.

In operation 2825, the processor 110 uses the optimal speed of the ship for each navigation section, which is included in the (n+1)-th intermediate navigation information. Thus, the optimal speed of the ship included in the (n+1)-th intermediate navigation information may differ from the speed of the ship for each navigation section that is included in the recommended navigation information. When the speed of the ship changes, the latitude and longitude of the ship over time may also change. Thus, the weather information may also differ from the weather information included in the recommended navigation information. In addition, when the weather information changes, the BOG generation amount of the ship and the tank pressure of the ship may also change.

For example, in operation 2825, the processor 110 updates the weather information by using the optimal ship speed included in the (n+1)-th intermediate navigation information. In addition, when performing operation 2822 again, the processor 110 uses the updated weather information.

For example, when the processor 110 performs operation 2822 again, the BOG generation amount prediction value for the ship may be changed by using the (n+1)-th gas consumption amount instead of the n-th gas consumption amount. Thus, as the BOG generation amount prediction value for the ship is changed, the intermediate navigation information may be changed. In addition, when the processor 110 performs operation 2822 again, the tank pressure value of the ship may be changed by using the updated weather information instead of the weather information included in the recommended navigation information, and as the tank pressure value of the ship is changed, the intermediate navigation information may be changed.

In operation 2826, when the difference between the (n+1)-th gas consumption amount and the n-th gas consumption amount falls within the preset range, the processor 110 may confirm the (n+1)-th intermediate navigation information as optimal navigation information. Here, the optimal navigation information may include the BOG generation amount prediction value for the ship, the tank pressure prediction value for the ship, and the gas consumption amount of the ship, the optimal speed of the ship, and the amount of use of equipment installed on the ship, which are included in the (n+1)-th intermediate navigation information.

Referring again to FIG. 26, in operation 2620, the processor 110 may update the optimal navigation information by considering the constraints of the ship. Here, the constraints may be set based on at least one of relationships between a mass, energy, a power amount, maximum/minimum liquefied gas consumption amounts of equipment, the efficiency of equipment, the efficiency of the main engine, the efficiency of the generator engine, the efficiency of the shaft generator, the pressure of a tank, the maximum/minimum speeds of the ship, and the average speed of the ship.

In other words, the constraints may include a mass condition, an energy condition, a power amount condition, a maximum/minimum liquefied gas consumption amount condition for equipment, an efficiency condition for equipment, an efficiency condition for a main engine, an efficiency condition for a generator engine, an efficiency condition for a shaft generator, a tank pressure condition, a maximum/minimum speed condition for the ship, an average speed condition for the ship, and the like, and each constraint will be described in detail below.

For example, the mass condition may be set based on the mass of BOG consumed by equipment installed on the ship. Here, the mass of consumed BOG may be calculated by considering the relationship between the mass of BOG used by the main engine and the generator engine, the mass of BOG discharged from the GCU, and the mass of BOG reliquefied by the reliquefaction unit.

For example, the energy condition may be set based on a difference value in the amount of change in tank pressure for each navigation section. Here, the difference value in the amount of change in tank pressure for each navigation section may be calculated by considering the relationship between the BOG generation amount for each navigation section, the amount of BOG returned to the tank, the amount of liquefied gas returned to the tank, and the BOG consumption amount of equipment installed on the ship.

For example, the power amount condition may be set based on the power amount of equipment installed on the ship. Here, the power amount of the equipment installed on the ship may be calculated by considering the relationship between the respective amounts of use of a compressor, a GCU, a reliquefaction unit, a subcooler, and a fuel gas pump.

For example, the maximum/minimum liquefied gas consumption amount condition for equipment may be set based on a turndown ratio. When the required liquefied gas consumption amount for a piece of equipment is greater than the minimum liquefied gas consumption amount condition for equipment, the equipment operates with a minimum liquefied gas consumption amount.

For example, the efficiency condition for equipment may be set based on an amount of change in the power amount of the equipment according to the amount of liquefied gas used by each piece of equipment. Here, the efficiency of equipment refers to the performance of the equipment relative to the amount of liquefied gas used by the equipment. For example, the performance of a compressor may refer to a target compression pressure. As another example, the performance of a reliquefaction unit may refer to a target reliquefaction temperature.

For example, the efficiency condition for a main engine may be set based on a speed of the ship and the required amount of liquefied gas fuel. Here, the speed of the ship may be an optimal speed for each navigation section included in optimal navigation information. In addition, the required liquefied gas fuel may be LNG or BOG.

For example, the efficiency condition for a generator engine may be set based on the power amount consumed by equipment installed on the ship, and the basic power consumption of the ship. Here, the power amount of the equipment installed on the ship may be the sum of the power amounts consumed by all pieces of equipment. In addition, the basic power consumption of the ship may refer to the baseline power usage of the ship.

For example, the efficiency condition for a shaft generator may be set based on the amount of electrical power generated by the shaft generator according to the rotation speed of the main engine. Here, the sum of the amounts of electrical power generated by the shaft generator and the generator engine may constitute the total amount of electrical power generated in the ship.

For example, the tank pressure condition may be set based on a maximum value and a minimum value for the tank pressure. Here, the tank pressure may be obtained by using different methods for laden voyages and ballast voyages.

For example, the maximum/minimum speed condition for the ship may be set based on engine performance. Here, navigating at a speed below the minimum speed corresponds to a speed of 0, meaning that the ship is stopped.

For example, the average speed condition for the ship may be set based on a speed for each navigation section. For example, when a speed for each navigation section included in recommended navigation information is used for navigation of the ship, the average of speeds for respective sections may be equal to a total average speed calculated based on a total navigation duration and a total navigation distance. As another example, when a speed for each navigation section included in optimal navigation information is used for navigation of the ship, the average of speeds for respective sections may be equal to a total average speed calculated based on a total navigation duration and a total navigation distance.

Thus, considering each constraint described above, the processor 110 may update the optimal navigation information such that it satisfies the constraints.

Referring again to FIG. 26, in operation 2630, the processor 110 may control the operation of the ship by using the updated optimal navigation information.

For example, the processor 110 may control the ship according to a preset operating mode by using the optimal navigation information. Here, the operating mode may include an operating mode that minimizes the gas consumption amount of the ship.

For example, when the processor 110 controls the operation of the ship by using the optimal navigation information, the gas consumption amount of the ship may be minimized. In other words, the processor 110 may control the ship according to an operating mode that minimizes the gas consumption amount of the ship.

Thus, by using the optimal navigation information that is updated considering the constraints, the processor 110 may control the ship according to an operating mode that minimizes the consumption amount of the ship.

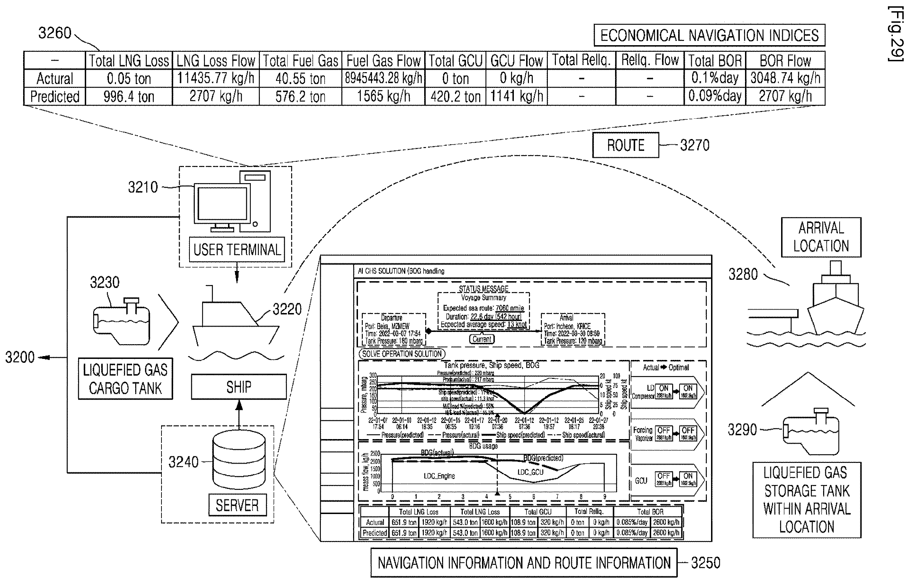

FIG. 29 is a diagram for describing an example of a system for controlling navigation of a ship, according to an embodiment.

A ship 3220 may include a user terminal 3210 and a server 3240. For example, the user terminal 3210 and the server 3240 may be connected to each other in a wired or wireless communication manner to transmit and receive data (e.g., navigation information) to and from each other.

For convenience of description, FIG. 29 illustrates that a system 3200 includes the user terminal 3210 and the server 3240, but the present disclosure is not limited thereto. For example, other external devices (not shown) may be included in the system 3200, and operations of the user terminal 3210 and the server 3240 to be described below may be implemented by a single device (e.g., the user terminal 3210 or the server 3240) or more devices.

The user terminal 3210 may be a computing device that is equipped with a display device and/or a device (e.g., a keyboard or a mouse) for receiving a user input, and includes a memory and a processor. For example, the user terminal 3210 may correspond to a notebook PC, a desktop PC, a laptop, a tablet computer, a smart phone, or the like, but is not limited thereto.

The server 3240 may include a communication module capable of communicating with external devices (not shown), including the user terminal 3210, or with other devices. The communication module may communicate with external devices (not shown), including the user terminal 3210, via a network. For example, the network may include a value-added network (VAN), a mobile radio communication network, a satellite communication network, and/or a combination thereof. The network is a comprehensive data communication network that enables the components illustrated in FIG. 29 to communicate seamlessly with each other, and may include a wired communication network and/or a wireless communication network. For example, the server 3240 may transmit preset navigation information and route information 3250 to the user terminal 3210. Alternatively, the server 3240 may be a computing device including a memory and a processor, and having computational capabilities. For example, the server 3240 may store various pieces of data, including the navigation information and route information 3250.

In the related art, the operator of the ship 3220 controls the pressure of a tank 3230 and the amount of liquefied gas evaporated in the tank 3230, based on an integrated automation system (IAS), which is an integrated control device. However, the IAS cannot accurately predict changes in the pressure of the tank 3230 or changes in the amount of liquefied gas evaporated in the tank 3230 due to weather changes during a navigation process. As a result, the operator of the ship 3220 repeatedly performs a process of determining the amount of use of evaporated gas for controlling the pressure of the tank 3230, during navigation of the ship 3220. This results in uneconomical navigation of the ship 3220.

According to an embodiment, the user terminal 3210 may calculate at least one prediction value for controlling navigation of the ship 3220, and economical navigation indices 3260 for the ship 3220. In addition, the user terminal 3210 may obtain real-time measured values according to navigation of the ship 3220, and compare the measured values with the prediction value and the economical navigation indices 3260.

Accordingly, the user terminal 3210 controls the ship 3220 by using a result of comparing the measured values with the prediction value and the economical navigation indices 3260, and thus, judgment from the operator may be minimized. Thus, an issue of uneconomical navigation, caused by requiring excessive judgment from the operator, may be solved. Furthermore, the operator may confirm, during navigation, whether economical navigation is underway, even without using an IAS.

The ship 3220 may include the tank 3230. In addition, a tank 3290 may be located within an arrival location 3280. Thus, when the ship 3220 is navigating, the tank 3230 may be located at sea, while the tank 3290 may be located on land. For example, the tank 3230 and the tank 3290 may have a double-walled structure and may include an inner tank and an outer tank. The inner tank is a space where liquefied gas is stored. The outer tank surrounds the inner tank and serves the role of insulation for liquefied gas.

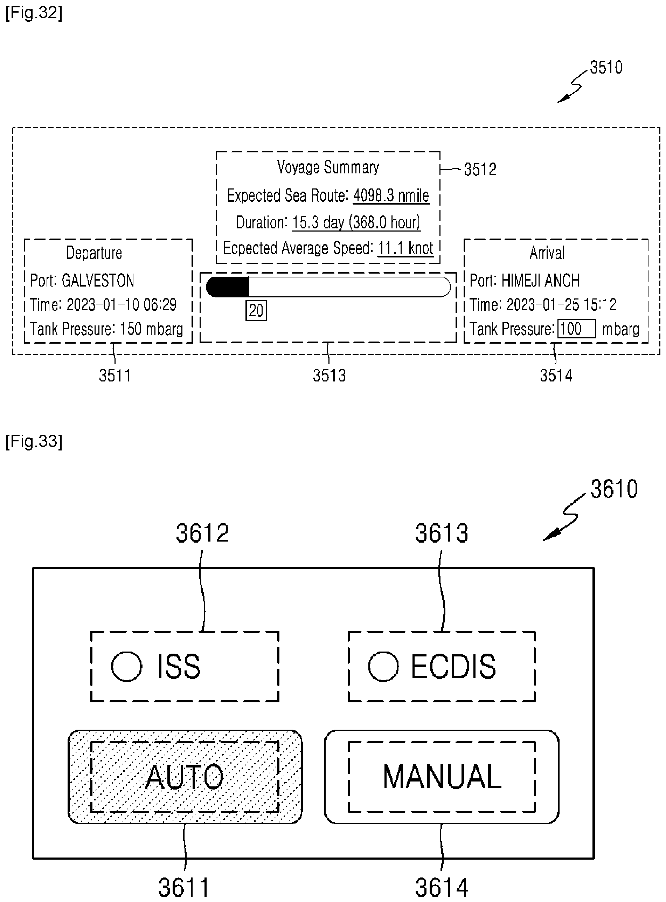

The ship 3220 moves to the arrival location 3280 along a preset route 3270. A detailed method of setting the route 3270 will be described below with reference to FIG. 33.

Hereinafter, an example in which the user terminal 3210 operates will be described with reference to FIG. 2 and FIGS. 30 to 36.

Referring again to FIG. 2, the user terminal 100 of FIG. 2 may be the same device as the user terminal 3210 of FIG. 29.

The processor 110 may obtain, from the server 3240, the preset navigation information and route information 3250 for the ship 3220. For example, the processor 110 may obtain, from the server 3240, the pressure of the tank 3230 upon arrival at the arrival location, port entry/departure information for the ship 3220, a total navigation distance, a total navigation duration, an average speed, and weather information. In addition, the processor 110 may obtain the latitude, longitude, and speed of the ship 3220 corresponding to at least one preset time point.

In addition, by using the Navigation information and route information 3250, the processor 110 may calculate at least one prediction value for controlling navigation of the ship 3220. For example, the processor 110 may calculate at least one of a prediction value for the pressure inside the tank 3230, a prediction value for the amount of liquefied gas evaporated in the tank 3230, a prediction value for the flow rate at which liquefied gas, which is boosted by a pump inside the tank 3230, is supplied from a vaporizer to a device inside the ship 3220, and a prediction value for the flow rate at which liquefied gas evaporated in the tank 3230 is supplied from a compressor to a device inside the ship 3220.

In addition, the processor 110 may control the ship 3220 by comparing the prediction values with measured values obtained in real time according to navigation of the ship 3220.

In addition, although not illustrated in FIG. 2, the user terminal 100 may further include a display device. Alternatively, the user terminal 100 may be connected to an independent display device in a wired or wireless communication manner to transmit and receive data to and from the display device. For example, a result of comparing the prediction values with the measured values, and the like may be provided to a user via the display device.

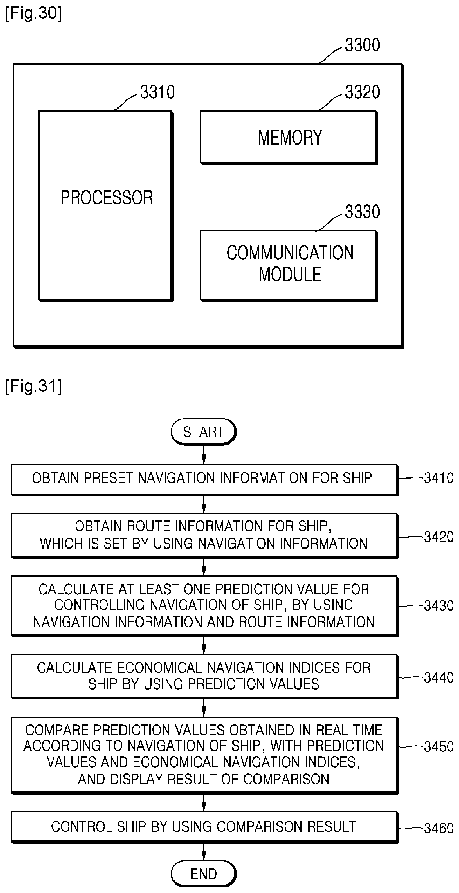

FIG. 30 is a configuration diagram illustrating an example of a server according to an embodiment.

A server 3300 includes a processor 3310, a memory 3320, and a communication module 3330. For convenience of description, FIG. 30 illustrates only components associated with the present disclosure. Thus, the server 3300 may further include other general-purpose components, in addition to the components illustrated in FIG. 30. In addition, it is obvious to those of skill in the art related to the present disclosure that the processor 3310, the memory 3320, and the communication module 3330 illustrated in FIG. 30 may also be implemented as independent devices. In addition, the server 3300 of FIG. 30 may be the same device as the server 3240 of FIG. 29.

The processor 3310 may set route information by using navigation information. In addition, the processor 3310 may transmit navigation information, route information, and the like to the user terminal 3210.

The navigation information and route information 3250, and the like may be stored in the memory 3320. In addition, the memory 3320 may store an OS and at least one program (e.g., a program necessary for an operation of the processor 3310).

The communication module 3330 may provide a configuration or function for the server 3300 and the user terminal 3210 to communicate with each other via a network. In addition, the communication module 3330 may provide a configuration or function for the server 3300 to communicate with another external device. For example, a control signal, a command, data, and the like provided under control of the processor 3310 may be transmitted to the user terminal 3210 and/or an external device via the communication module 3330 and a network.

FIG. 31 is a flowchart for describing an example of a method of controlling navigation of a ship, according to an embodiment.

A method of controlling navigation of the ship 3220 includes operations that are processed, in a time-series manner, by the user terminal 3210 or 100 or the processor 110 illustrated in FIGS. 2 and 32. Thus, the descriptions provided above regarding the user terminal 100 or 3210 or the processor 110 illustrated in FIGS. 2 and 29, which are even omitted below, may also be applied to the method of controlling navigation of the ship 3220 of FIG. 29.

In operation 3410, the processor 110 obtains, from the server 3240, preset navigation information for the ship 3220.

For example, the navigation information may include port entry/departure information for the ship 3220, a total navigation distance, a total navigation duration, an average speed, and weather information. In addition, the navigation information may include a pressure of the tank 3230 included in the ship 3220 at a time point of scheduled arrival at an arrival location. The pressure of the tank 3230 at the time point of scheduled arrival may correspond to any one of a pressure of the tank 3290 located at the arrival location, and a preset pressure.

In operation 3420, the processor 110 obtains, from the server 3240, route information for the ship 3220, which is set by using the navigation information.

For example, the route information may include at least one the latitude, longitude, and speed of the ship 3220 with respect to at least one preset time point.

Hereinafter, navigation information and route information will be described in detail with reference to FIGS. 32 and 33.

FIG. 32 is a diagram illustrating an example of a screen on which preset navigation information for a ship is displayed, according to an embodiment.

FIG. 32 illustrates an example of a screen 3510 on which various pieces of navigation information are displayed. In detail, various pieces of navigation information may be displayed separately in areas 3511, 3512, 3513, and 3514 of the screen 3510. However, the layout of the screen 3510 and the output areas for the navigation information are not limited to the example illustrated in FIG. 32.

The area 3511 may display the name of a location from which the ship 3220 is to depart, a departure time of the ship 3220, and the pressure of a liquefied gas cargo tank within the departure location. For example, the pressure of the tank 3230 upon departure may correspond to the pressure of the liquefied gas cargo tank within the departure location.

In addition, the area 3512 may display a total navigation distance, a total navigation duration, and an average speed of the ship 3220. For example, the total navigation distance may be calculated as the distance traveled by the ship 3220 from the time point of departure from the departure location to the time point of arrival at the arrival location 3280. In addition, the total navigation duration may be calculated as the time elapsed from the time point at which the ship 3220 departs from the departure location, to the time point at which the ship 3220 arrives at the arrival location 3280. In addition, the average speed may be calculated by dividing the total navigation distance by the total navigation duration.

In addition, the area 3513 may display the name of the arrival location of the ship 3220, the time point at which the ship 3220 is to arrive at the arrival location, and the pressure of the tank 3290. For example, the pressure of the tank 3230 upon arrival may correspond to any one of the pressure of the tank 3290 and a preset pressure.

However, the navigation information may not include the pressure of the tank 3290. In this case, the processor 110 may calculate a prediction value by assuming that the pressure of the tank 3290 is a certain value (e.g., 100 mbarg).

In addition, the area 3514 may display information representing, as a percentage, a real-time measured navigation distance traveled by the ship 3220 from departure to the time point of measurement, relative to the total navigation distance.

In addition, although not illustrated in FIG. 32, the navigation information may include weather information. For example, the weather information may refer to weather information along the route 3270 from the time point at which the ship 3220 departs from the departure location, until the time point at which the ship 3220 arrives at the arrival location 3280. In addition, the weather information may include an air pressure, an air temperature, a wave height, and the like.

FIG. 33 is a diagram illustrating an example of a screen from which any one of a manually set route for a ship and a route for the ship that is automatically set via a route optimization function may be obtained, according to an embodiment.

FIG. 33 illustrates an example of a screen 3610 from which the processor 110 may obtain route information. In detail, various selection areas may be displayed in areas 3611, 3612, 3613, and 3614 of the screen 3610. However, the layout of the screen 3610 and the output areas for selection information are not limited to the example illustrated in FIG. 33.

The processor 110 may obtain, from the server 3240, any one of a manually set route for the ship 3220 and a route for the ship 3220 that is automatically set via a route optimization function.

Here, the manually set route and the automatically set route are set by using preset navigation information.

For example, when the user selects the area 3611, the processor 110 may activate the previously inactive areas 3612 and 3613. When the user selects the activated area 3612, the processor 110 may request the server 3240 to transmit route information for a route that is automatically set via an Integrated Smartship Solution (ISS). As a result, the processor 110 may obtain the route information from the server 3240.

In addition, when the user selects the activated area 3613, the processor 110 may request the server 3240 to transmit route information for a route that is automatically set via an Electronic Chart Display Information System (ECDIS). As a result, the processor 110 may obtain the route information from the server 3240.

In addition, when the user selects the area 3614, the processor 110 may request the server 3240 to transmit route information for a manually set route. As a result, the processor 110 may obtain the route information from the server 3240.

The route optimization function refers to a technology for optimizing a route and a speed during navigation of the ship 3220, thereby minimizing the liquefied gas fuel consumption and optimizing the navigation duration. For route optimization, various factors are considered, such as the location and speed of the ship 3220, or weather information. The ISS and the ECDIS are examples of programs that include a route optimization function.

The ISS is a system for managing navigation of the ship 3220 and the operation of devices of the ship 3220, and is a program that collects key data regarding the ship 3220 in real time to provide analysis services for major machinery including engines, and a navigation optimization function. In addition, the ECDIS is a program that provides the user with navigation information and charts of sea areas.

In addition, information about the manually set route and information about the route that is automatically set via the route optimization function, for the ship 3220, include the latitude, longitude, and speed of the ship 3220 with respect to at least one preset time point.

For example, the server 3240 may set N time points after the time point of departure of the ship 3220. For example, the number of time points may be preset according to a certain period, or may be adjusted based on a user input. In addition, the zeroth time point may correspond to the time point at which the ship 3220 departs from the departure location, and the N-th time point may correspond to the time point at which the ship 3220 arrives at the arrival location. The route information may include at least one of the latitude, longitude, and speed of the ship 3220 with respect to at least one of the N time points. Here, N is a natural number greater than or equal to 1.

For example, in a case in which the period is 2 days and the total navigation duration is 24 days, the route information may include information about the ship 3220 with respect to a total of 12 time points. The route information may include information about the latitude, longitude, and speed of the ship 3220 at 2-day intervals after departure. In addition, the pressure of the tank 3230 at the 12th time point may correspond to the pressure of the tank 3290 at the arrival location.

Referring again to FIG. 31, in operation 3430, by using the navigation information and route information 3250, the processor 110 calculates at least one prediction value for controlling navigation of the ship 3220.

For example, the prediction values may include at least one of a prediction value for the internal pressure of the tank 3230, a prediction value for the amount of liquefied gas evaporated in the tank 3230, and a prediction value for the flow rate at which liquefied gas evaporated in the tank 3230 is supplied from a compressor to a device inside the ship 3220. For example, the devices may include at least one of a compressor included in the tank 3230, a vaporizer included in the tank 3230, a GCU, a reliquefaction unit, a main engine, and a generator engine.

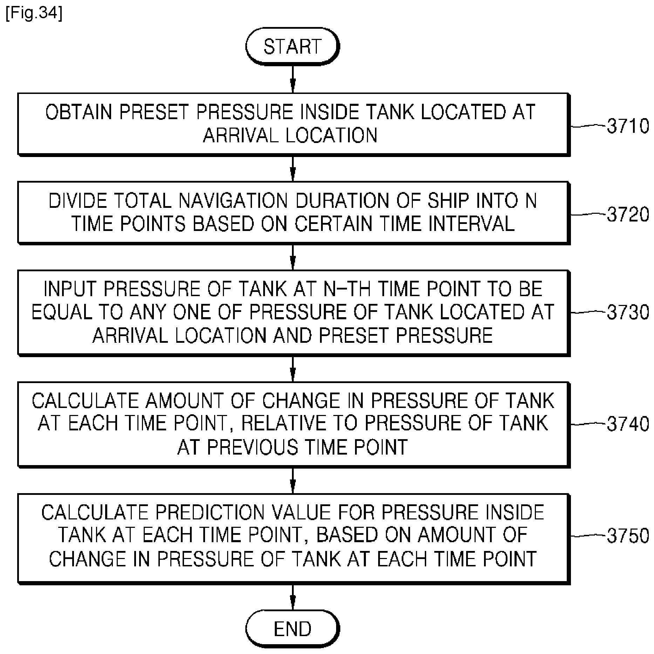

Hereinafter, with reference to FIG. 34, a process of calculating a prediction value for the pressure inside the tank 3230 for controlling navigation of the ship 3220, by using the navigation information and route information 3250 will be described.

FIG. 34 is a diagram for describing an example of a method of calculating a prediction value for the pressure of a liquefied gas cargo tank, according to an embodiment.

In operation 3710, the processor 110 may obtain, from the server 3240, a preset pressure inside the tank 3290 located at the arrival location.

In a case in which the pressure of the tank 3290 is not set, the processor 110 may calculate a prediction value for the pressure of the tank 3230 by assuming that the pressure of the tank 3290 is a certain value (e.g., 100 mbarg).

In operation 3720, the processor 110 may divide the total navigation duration of the ship 3220 into N time points based on a certain time interval. The number of time points (i.e., N) is determined by the value obtained from dividing the total navigation duration by the time interval. For example, the number of time points may be preset, or may be determined arbitrarily by the user. Here, N is a natural number greater than or equal to 1.

In operation 3730, the processor 110 may set the pressure of the tank 3230 at the N-th time point to correspond to any one of the pressure of the tank 3290 at the arrival location and a preset pressure.

In operation 3740, the processor 110 may calculate an amount of change in the pressure of the tank 3230 at each time point, relative to the pressure of the tank 3230 at the previous time point. For example, when the processor 110 calculates the amount of change in the pressure of the tank 3230 at each time point relative to the pressure of the tank 3230 at the previous time point, the amount of change in the pressure of the tank 3230 is as in Equation 1 below. Tank pressure change amount=α×(Evaporation energy of LNG evaporated in tank)+β×(Energy of gas introduced into tank)-γ×(Energy of gas discharged from tank)

The processor 110 may set the α, β, and γ values by considering cargo characteristics of the ship 3220, pressure change characteristics of the tank 3230, shape characteristics of the tank 3230, and the like. The evaporation energy of the liquefied gas evaporated in the tank 3230, the energy of gas introduced into the tank 3230, and the energy of gas discharged from the tank 3230 may be constants determined according to mass flow meters at gas consumers in the ship 3220. For example, the gas consumers may include a main engine, a generator engine, a GCU, and a reliquefaction unit.

In operation 3750, based on the amount of change in the pressure of the tank 3230 at each time point, which is calculated in operation 540, the processor 110 may calculate a prediction value for the pressure inside the tank 3230 at each time point.

Referring again to FIG. 31, in operation 3430, the prediction values calculated by the processor 110 may include a prediction value for the amount of liquefied gas evaporated in the tank 3230.

In the related art, a prediction value for the amount of liquefied gas evaporated in the tank 3230 is calculated by substituting unpredictable data, such as the temperature of liquefied gas inside the tank 3230, into simple formulas. This method suffers from an issue that accurate prediction of liquefied gas evaporated is impossible.

To solve the related-art issue of prediction inaccuracy, the processor 110 may calculate a prediction value for the amount of liquefied gas evaporated, by using a deep learning model. In this case, the deep learning model may be trained, by using training data such as navigation information and route information, to calculate a prediction value for the amount of liquefied gas evaporated.

The deep learning model refers to a statistical learning algorithm implemented based on the structure of a biological neural network, or a structure for executing the algorithm, in machine learning technology and cognitive science.

For example, the deep learning model may refer to a machine learning model that obtains a problem-solving ability by repeatedly adjusting the weights of synapses by nodes that are artificial neurons forming a network in combination with the synapses as in biological neural network, to learn such that an error between a correct output corresponding to a particular input and an inferred output is reduced.

For example, the deep learning model may be implemented as an MLP composed of multilayer nodes and connections therebetween. The deep learning model according to the present embodiment may be implemented by using one of various artificial neural network model structures including MLP. For example, the deep learning model may include an input layer that receives an input signal or data from the outside, an output layer that outputs an output signal or data corresponding to the input data, and at least one hidden layer that is between the input layer and the output layer, and receives a signal from the input layer, extracts features, and delivers the features to the output layer. The output layer receives a signal or data from the hidden layer, and outputs the signal or data to the outside.

In addition, the deep learning model for calculating an amount of liquefied gas evaporated in the tank 3230 may be stored in and operate on the user terminal 3210.

In operation 3440, the processor 110 may calculate the economical navigation indices 3260 for the ship 3220 by using the prediction values.

Here, the economical navigation indices 3260 may include at least one of a loss amount of liquefied gas inside the tank 3230, an amount of liquefied gas consumed by engines of the ship 3220, an amount of liquefied gas incinerated by a GCU, a flow rate at which liquefied gas is reliquefied inside the tank 3230, and a daily boil-off rate (BOR).

For example, the processor 110 may calculate the economical navigation indices 3260 by using navigation information, route information, a prediction value for the amount of liquefied gas evaporated in the tank 3230, and a prediction value for the pressure of the tank 3230.

For example, the processor 110 may calculate the economical navigation indices 3260 by using an operation optimization analysis model.

The operation optimization analysis model is a model for reducing the loss amount of liquefied gas by determining a flow rate of liquefied gas supplied to devices such as tank 3230, engines, or a GCU, and a flow rate of liquefied gas consumed by each device.

For example, via the operation optimization analysis model, the processor 110 may calculate the economical navigation indices 3260 by using navigation information, route information, a prediction value for the pressure of the tank 3230, and a prediction value for the amount of liquefied gas evaporated in the tank 3230.

In addition, the operation optimization analysis model may calculate the economical navigation indices 3260 by considering various constraints. For example, the model may calculate the economical navigation indices 3260 by considering the relationship between a mass, energy, a power amount, maximum/minimum liquefied gas consumption amounts of equipment, the efficiency of equipment, the efficiency of a main engine, the efficiency of a generator engine, the efficiency of a shaft generator, the pressure of the tank 3230, maximum/minimum speeds of the ship 3220, and an average speed of the ship 3220.

In addition, the operation optimization analysis model for calculating the economical navigation indices 3260 may be stored in and operate on the user terminal 3210.

In operation 3450, the processor 110 may compare prediction values obtained in real time according to navigation of the ship 3220, with the prediction values and the economical navigation indices, and display a result of the comparison.

In operation 3460, the processor 110 may control the ship 3220 by using the comparison result.

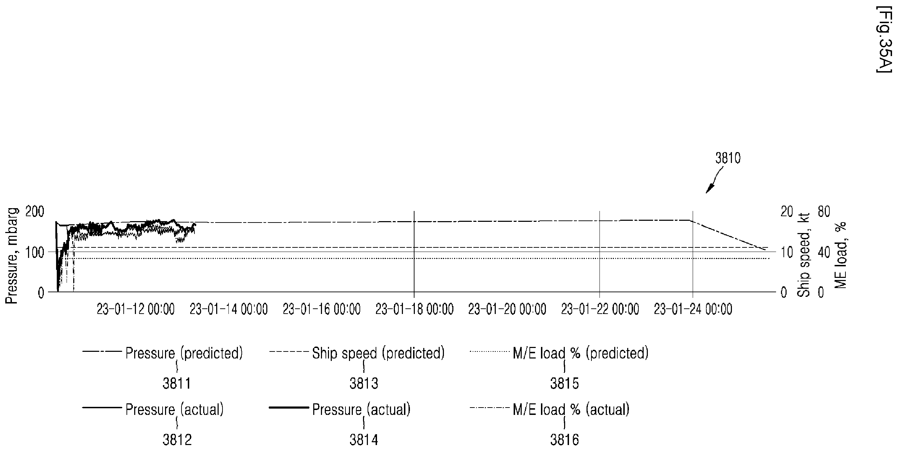

Hereinafter, an example of a result of comparing, by the processor 110, measured values with prediction values and economical navigation indices will be described with reference to FIGS. 35A to 35C.

FIG. 35A is a diagram illustrating an example of a result of comparing prediction values for the pressure inside a liquefied gas cargo tank pressure with measured values, and a result of comparing an average speed value with measured values, according to an embodiment.

As illustrated in FIG. 35A, a result of comparing prediction values with measured values may be generated in the form of a graph 3810, but the method of presenting a comparison result is not limited to the graph 3810.

In the graph 3810, a first dotted line 3811 represents prediction values for the pressure inside the tank 3230, and a first solid line 3812 represents measured values for the pressure inside the tank 3230.

The processor 110 may control the ship 3220 such that the pressure of tank 3230 falls within a pressure control range that is set based on the prediction values for the pressure inside the tank 3230. For example, when the ship 3220 is performing a laden voyage, the pressure control range may refer to a range greater than or equal to 60 mbarg but less than or equal to 190 mbarg.

When the pressure of the tank 3230 in the ship 3220 exceeds the pressure control range, the processor 110 may control the ship 3220 such that the pressure of tank 3230 decreases. For example, the processor 110 may decrease the pressure of the tank 3230 by increasing the flow rate at which evaporated liquefied gas is supplied from the tank 3230 to a GCU. In addition, the processor 110 may decrease the pressure of the tank 3230 by changing the combination of devices that supply and receive liquefied gas.

In addition, when the measured value is less than the prediction value, to increase the pressure of the tank 3230, the processor 110 may control the tank 3230 such that the amount of liquefied gas supplied from the tank 3230 to a GCU, a main engine, a generator engine, and a reliquefaction unit is decreased.

In the graph 3810, a second dotted line 3813 represents prediction values for the speed of the ship 3220, and a second solid line 3814 represents measured values for the speed of the ship 3220.

The processor 110 may control the ship 3220 such that the measured values correspond to the prediction values. For example, when the measured value is greater than the prediction value, the processor 110 may control the ship 3220 such that the speed of the ship 3220 decreases. In addition, when the measured value is less than the prediction value, the processor 110 may control the ship 3220 such that the speed of the ship 3220 increases.

In the graph 3810, a third dotted line 3815 represents prediction values for the load factor of the main engine inside the ship 3220, and a third solid line 3816 represents measured values for the load factor of the main engine inside the ship 3220.

The processor 110 may control the ship 3220 such that the load factor of the main engine inside the ship 3220 corresponds to the prediction values. For example, the processor 110 may change the combination of devices that supply and receive liquefied gas. In addition, the processor 110 may control the supply flow rate of the device that supplies liquefied gas.

For example, when the load factor of the main engine inside the ship 3220 is greater than the prediction value, the processor 110 may control the ship 3220 such that the flow rate at which liquefied gas is supplied from tank 3230 to the main engine is increased. In addition, when the load factor of the main engine inside the ship 3220 is less than the prediction value, the processor 110 may control the ship 3220 such that the flow rate at which liquefied gas is supplied from tank 3230 to the main engine is decreased.

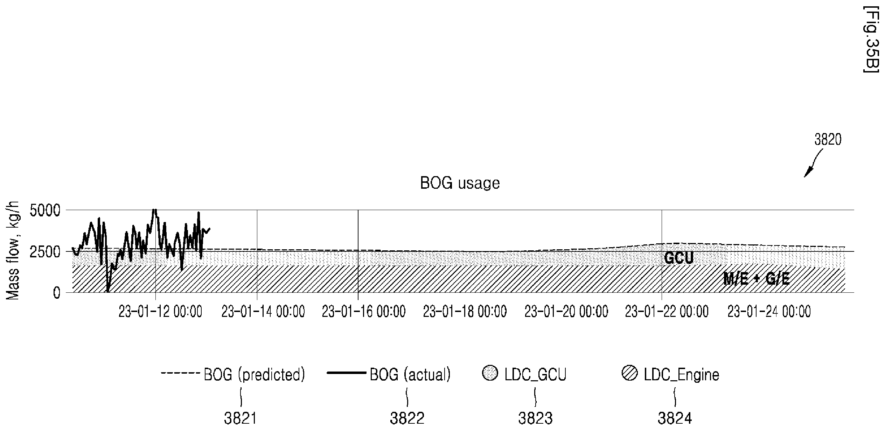

FIG. 35B is a diagram illustrating an example of a result of comparing prediction values for the amount of liquefied gas evaporated in a liquefied gas cargo tank, with measured values, according to an embodiment.

As illustrated in FIG. 35B, a result of comparing prediction values with measured values may be output in the form of a graph 3820, but the method of presenting a comparison result is not limited to the graph 3820.

In the graph 3820, a first dotted line 3821 represents prediction values for the amount of liquefied gas evaporated in the tank 3230, and a first solid line 3822 represents measured values for the amount of liquefied gas evaporated in the tank 3230.

For example, the processor 110 may calculate a prediction value for the amount of evaporated liquefied gas, via a deep learning model.

The processor 110 may control the ship 3220 according to a prediction value for the amount of evaporated liquefied gas. For example, depending on the prediction value, the processor 110 may control the type of device to supply evaporated liquefied gas. In addition, the processor 110 may control the supply flow rate of a device that supplies evaporated liquefied gas.

For example, based on the prediction value, the processor 110 may control the ship 3220 such that devices for supplying evaporated liquefied gas are limited to a compressor included in the tank 3230. In addition, based on the prediction value, the processor 110 may control the ship 3220 such that the flow rate at which evaporated liquefied gas is supplied by the compressor to devices of the ship 3220 is 2500 kg/h. In addition, based on the prediction value, the processor 110 may control the ship 3220 such that the flow rate at which evaporated liquefied gas is supplied by the compressor to a GCU is 1000 kg/h, and the flow rate at which evaporated liquefied gas is supplied by the compressor to a main engine and a generator engine is 1500 kg/h.

In the graph 3820, a first region 3823 represents prediction values for the flow rate at which evaporated liquefied gas is supplied by a compressor included in the tank 3230 to a GCU. A second region 3824 represents prediction values for the flow rate at which evaporated liquefied gas is supplied by the compressor included in the tank 3230 to a main engine and a generator engine.

In addition, although not illustrated in the graph 3820, the prediction values may include prediction values for the flow rate at which evaporated liquefied gas is supplied by the compressor to a reliquefaction unit, prediction values for the flow rate at which evaporated liquefied gas is supplied by a vaporizer included in the tank 3230 to a main engine and a generator engine, and prediction values for the flow rate at which evaporated liquefied gas is supplied by a tank included in the tank 3230 to a subcooler.

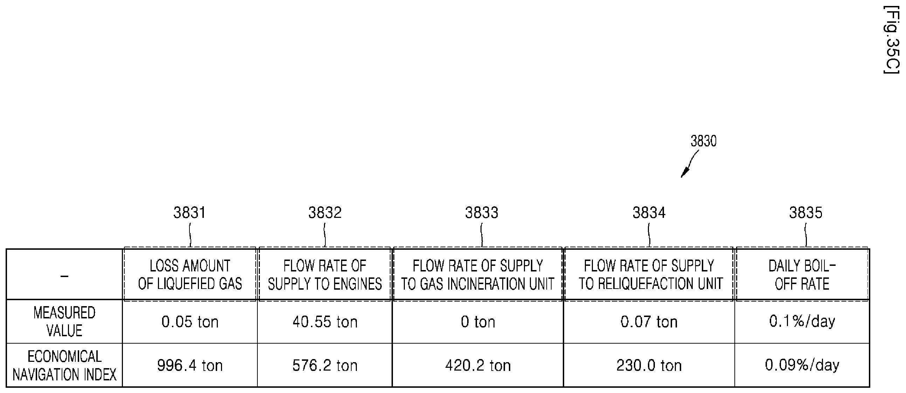

FIG. 35C is a diagram illustrating an example of a result comparing economical navigation indices for a ship with measured values, according to an embodiment.

As illustrated in FIG. 35C, a result of comparing the economical navigation indices 3260 with measured values may be generated in the form of a table 3830, but the method of presenting a comparison result is not limited to the table 3830.

A first item 3831 refers to a loss amount of liquefied gas inside the tank 3230. For example, the processor 110 may calculate a measured value for the first item 3831 as the sum of a cumulative value for the flow rate at which liquefied gas is supplied by the tank 3230 to a main engine, a cumulative value for the flow rate at which liquefied gas is supplied by the tank 3230 to a generator engine, and a cumulative value for the flow rate at which liquefied gas is supplied by the tank 3230 to a GCU, over the time period from departure of the ship 3220 to the measurement time.

In addition, a second item 3832 refers to the amount of liquefied gas consumed by engines of the ship 3220. For example, the processor 110 may calculate a measured value for the second item 3832 as the sum of a cumulative value for the flow rate at which liquefied gas is supplied by the tank 3230 to a main engine, and a cumulative value for the flow rate at which liquefied gas is supplied by the tank 3230 to a generator engine, over the time period from departure to the measurement time.

In addition, a third item 3833 refers to the amount of liquefied gas incinerated by a GCU of the ship 3220. For example, the processor 110 may calculate a measured value for the third item 3833 as a cumulative value for the flow rate at which liquefied gas is supplied by the tank 3230 to a GCU, over the time period from departure to the measurement time.

In addition, a fourth item 3834 refers to a reliquefaction flow rate inside the tank 3230. For example, the processor 110 may calculate a measured value for the fourth item as a cumulative value for the flow rate at which liquefied gas passes through a reliquefaction unit, over the time period from departure to the measurement time.

In addition, a fifth item 3835 refers to a daily BOR. For example, the processor 110 may calculate a measured value for the fifth item 3835 as a daily average amount of evaporated liquefied gas relative to the total volume of liquefied gas stored in the tank 3230, over the time period from departure to the measurement time.

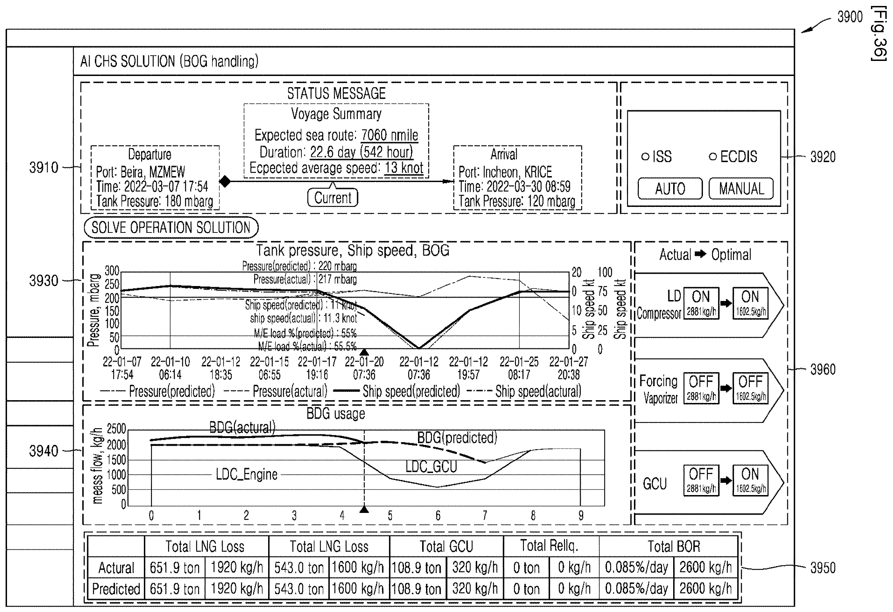

FIG. 36 is a diagram illustrating an example of a screen displayed by a processor, according to an embodiment.

FIG. 36 illustrates an example of an execution screen 3900 for a program that executes the method described above with reference to FIGS. 29 to 35C.

For example, an area 3910 may display preset navigation information for the ship 3220. In detail, at least one of the pressure of the tank 3230 upon arrival of the ship 3220 at the arrival location, ship 3220, port entry/departure information, a total navigation distance, a total navigation duration, an average speed, and weather information.

In addition, an area 3920 may display a screen from which the processor 110 may obtain route information. The processor 110 may obtain, from the server 3240, any one of a manually set route for the ship 3220 and a route for the ship 3220 that is automatically set via a route optimization function.

In addition, an area 3930 may display a result of comparing prediction values for the pressure of the tank 3230 with measured values, a result of comparing an average speed of the ship 3220 with measured values, and a result of comparing prediction values for the pressure of the tank 3230 with measured values.

In addition, an area 3940 may display a result of comparing prediction values for the amount of liquefied gas evaporated in the tank 3230 with measured values, prediction values for the flow rate at which liquefied gas is supplied by a compressor inside the tank 3230 to a generator engine and a main engine, and prediction values for the flow rate at which liquefied gas is supplied by the compressor inside the tank 3230 to a GCU.

In addition, an area 3950 may display a result of comparing the economical navigation indices 3260 with measured values. In detail, the economical navigation indices 3260 may include at least one of a loss amount of liquefied gas inside the tank 3230, an amount of liquefied gas consumed by engines of the ship 3220, an amount of liquefied gas incinerated by a GCU, a flow rate at which liquefied gas is reliquefied inside the tank 3230, and a daily BOR.

In addition, an area 3960 may display a result of comparing real-time flow rates of supply to devices of the ship 3220, with preset flow rates. Additionally, whether power is supplied to the devices may be displayed. In detail, the devices may include a compressor included in the tank 3230, a vaporizer included in the tank 3230, a GCU, a reliquefaction unit, and the like.

According the present disclosure as described above, recommended navigation information about a navigation route of a ship is generated based on navigation plan information associated with a departure location and an arrival location of the ship, a BOG generation amount of the ship and a tank pressure value of the ship are predicted based on the recommended navigation information, and optimal navigation information associated with operation control of the ship is obtained based on the BOG generation amount and the tank pressure value. In addition, according to the present disclosure, the ship may be controlled according to a preset operating mode by using the optimal navigation information.

According to the present disclosure as described above, a BOG generation amount and a tank pressure value are predicted based on environmental information including at least one of location-specific weather/climate information, tidal current information, sea state information, and ocean current information all about the navigation route of the ship, and optimal navigation information is obtained based on the predicted BOG generation amount and tank pressure value, to calculate an entire navigation operation, thereby providing guidance for cargo management from the departure point to the destination of the ship, and enabling safe cargo handling based on the predicted tank pressure value.

Furthermore, the present disclosure may provide a navigation method for maintaining a final target tank pressure by consuming more fuel to lower the tank pressure in locations where fuel demand is high, and consuming less fuel to raise the tank pressure in locations where fuel demand is lower, during a voyage.

In addition, the present disclosure may provide an operation guide to an operator so as to assist navigation by controlling the ship according to an operating mode that minimizes the liquefied gas consumption amount based on optimal navigation information, and may offer a carbon tax reduction effect by reducing the amount of incineration in a GCU and the fuel gas consumption of engines.

Furthermore, the present disclosure may assist the operator in making decisions regarding navigation, by predicting a BOG generation amount and a tank pressure value on unfamiliar navigation routes.

Meanwhile, the above-described method may be written as a computer-executable program, and may be implemented in a general-purpose digital computer that executes the program by using a computer-readable recording medium. In addition, the structure of the data used in the above-described method may be recorded in a computer-readable recording medium through various units. The computer-readable recording medium includes a storage medium, such as a magnetic storage medium (e.g., ROM, RAM, a Universal Serial Bus (USB) drive, a floppy disk, or a hard disk) and an optically readable medium (e.g., a CD-ROM or a digital video disc (DVD)).

In addition, the above-described method may be provided in a computer program product. The computer program product may be traded as commodities between sellers and buyers. The computer program product may be distributed in the form of a machine-readable storage medium (e.g., a CD-ROM), or may be distributed online (e.g., downloaded or uploaded) through an application store (e.g., Play Store^{™}) or directly between two user devices. In a case of online distribution, at least a portion of the computer program product may be temporarily stored in a machine-readable storage medium such as a manufacturer's server, an application store's server, or a memory of a relay server.

It will be understood by those of skill in the art that the present disclosure may be implemented in a modified form without departing from the intrinsic characteristics of the descriptions provided above. Therefore, the disclosed methods should be considered in an illustrative rather than a restrictive sense, and the scope of the present disclosure should be defined by claims rather than the foregoing description, and should be construed to include all differences within the scope equivalent thereto.

## Claims

1. A method of optimizing navigation of a ship, the method comprising:
generating recommended navigation information about a navigation route of the ship, based on navigation plan information associated with a departure location and an arrival location of the ship;
predicting a boil-off gas (BOG) generation amount of the ship and a tank pressure value of the ship, based on the recommended navigation information; and
obtaining optimal navigation information associated with operation control of the ship, based on the BOG generation amount and the tank pressure value.

2. The method of claim 1, wherein the navigation plan information comprises
a departure time, an arrival time, and location information about locations, and
the generating comprises:
obtaining environmental information about the navigation route of the ship, based on the navigation plan information; and
generating the recommended navigation information based on the navigation plan information and the environmental information, according to a fuel consumption amount and a BOG generation amount for the navigation route of the ship.

3. The method of claim 1, wherein the recommended navigation information comprises at least one of location information for each navigation section, speed information for each navigation section, and environmental information for each navigation section, for the navigation route.

4. The method of claim 3, wherein the predicting comprises:
predicting the BOG generation amount of the ship, based on at least one of the location information for each navigation section, the speed information for each navigation section, and the environmental information for each navigation section; and
predicting the tank pressure value of the ship, based on at least one of the location information for each navigation section, the speed information for each navigation section, the environmental information for each navigation section, and a preset liquefied gas consumption amount.

5. The method of claim 1, wherein the obtaining of the optimal navigation information comprises:
generating n-th intermediate navigation information associated with operation control of the ship, based on the BOG generation amount and the tank pressure value; and
confirming the (n+1)-th intermediate navigation information as the optimal navigation information, based on a comparison between the n-th intermediate navigation information and (n+1)-th intermediate navigation information, according to a preset threshold value,
the (n+1)-th intermediate navigation information is generated based on an updated value of at least one of speed information for each navigation section and a liquefied gas consumption amount both included in the n-th intermediate navigation information, and
n is a natural number greater than or equal to 1.

6. The method of claim 5, wherein the confirming comprises:
confirming, in response to a difference value, which is calculated based on the n-th intermediate navigation information and the (n+1)-th intermediate navigation information, being less than or equal to a preset threshold value, the (n+1)-th intermediate navigation information as the optimal navigation information; and
generating, in response to the difference value being greater than the preset threshold value, (n+2)-th intermediate navigation information by updating at least one of speed information for each navigation section and
a liquefied gas consumption amount both included in the (n+1)-th intermediate navigation information.

7. The method of claim 1, wherein the optimal navigation information comprises at least one of a BOG generation amount of the ship, a tank pressure value of the ship, speed information for each navigation section for the ship, a liquefied gas consumption amount of the ship, and an amount of use of equipment installed on the ship.

8. The method of claim 1, further comprising controlling the ship according to a preset operating mode by using the optimal navigation information, wherein the operating mode comprises an operating mode that minimizes a liquefied gas consumption amount of the ship.

9. A computer-readable recording medium having recorded thereon a program for causing a computer to execute the method of claim 1.

10. A computing device comprising:
at least one memory; and
at least one processor,
wherein the processor is configured to generate recommended navigation information about a navigation route of a ship, based on navigation plan information associated with a departure location and an arrival location of the ship, predict a boil-off gas (BOG) generation amount of the ship and a tank pressure value of the ship, based on the recommended navigation information, and obtain optimal navigation information associated with operation control of the ship, based on the BOG generation amount and the tank pressure value.

11. A method of predicting a boil-off gas (BOG) generation amount of a ship, the method comprising:
selecting input data for a BOG generation amount prediction model from a portion of pre-stored navigation data, by using an input data selection model;
training the BOG generation amount prediction model comprising a plurality of deep learning models, by using the input data; and
predicting the BOG generation amount via the trained BOG generation amount prediction model by using current navigation data of the ship.

12. The method of claim 11, wherein the selecting comprises:
calculating a correlation coefficient between the portion of the pre-stored navigation data and the BOG generation amount;
training the input data selection model by using the calculated correlation coefficient; and
selecting, as the input data, data for which the correlation coefficient is greater than or equal to a predetermined value, by using the trained input data selection model.

13. The method of claim 11, wherein the training comprises:
calculating ground-truth data for the training;
performing the training by using the input data and the calculated ground-truth data; and
validating the BOG generation amount prediction model by using another portion of the pre-stored navigation data.

14. The method of claim 11, wherein the predicting comprises:
outputting initial BOG generation amount prediction values from the plurality of deep learning models, respectively; and
calculating a final BOG generation amount prediction value by applying different weights to the initial BOG generation amount prediction values, respectively.

15. The method of claim 14, wherein the calculating comprises applying a highest weight to an initial BOG generation amount prediction value that is output from a stacking model, among the initial BOG generation amount prediction values.
